(19) **Europäisches Patentamt European Patent Office Office européen des brevets**

(11) **EP 3 561 475 B1**

(12) **EUROPEAN PATENT SPECIFICATION**

(45) Date of publication and mention of the grant of the patent:
**31.03.2021 Bulletin 2021/13**

(51) Int Cl.:
**G01M 15/05** *(2006.01)*     **G01M 15/06** *(2006.01)*
**G01M 15/08** *(2006.01)*     **F02D 35/02** *(2006.01)*
**F02D 41/00** *(2006.01)*

(21) Application number: **19170460.0**

(22) Date of filing: **23.04.2019**

(54) **COMBUSTION ANALYSIS APPARATUS FOR LARGE-SIZED LOW-SPEED ENGINE AND METHOD FOR DETERMINING COMBUSTION STATE OF ENGINE USING THE SAME**

VORRICHTUNG UND VERFAHREN ZUR VERBRENNUNG ANALYSE FÜR GROSSE UND LANGSAME MOTOREN

APPAREIL ET METHODE D'ANALYSE DE COMBUSTION POUR MOTEUR DE GRANDE DIMENSION ET A FAIBLE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2018 KR 20180047000**

(43) Date of publication of application:
**30.10.2019 Bulletin 2019/44**

(73) Proprietors:
• **Jung, Kyun Sik**
  **Geumjeong-Gu, Busan 46270 (KR)**
• **Lee, Su Kyoung**
  **Geumjeong-Gu, Busan 46270 (KR)**

(72) Inventors:
• **Jung, Kyun Sik**
  **Geumjeong-Gu, Busan 46270 (KR)**
• **Lee, Su Kyoung**
  **Geumjeong-Gu, Busan 46270 (KR)**

(74) Representative: **FARAGO Patentanwälte**
  **Thierschstraße 11**
  **80538 München (DE)**

(56) References cited:
**EP-A1- 1 571 331       EP-A2- 2 884 080**
**WO-A1-2004/048761    WO-A1-2017/076450**
**FR-A1- 2 888 880       US-A- 4 760 733**
**US-A1- 2007 100 534   US-A1- 2017 082 523**

**Description**

**CROSS-REFERENCE TO RELATED APPLICATIONS**

This application claims the priority of Korean Patent Application No. 10-2018-0047000 filed on April 23, 2018, in the Korean Intellectual Property Office.

**BACKGROUND**

**Field**

The present disclosure relates to a combustion analysis apparatus for a large-sized low-speed engine and a method for determining a combustion state of an engine using the same and, more particularly, to a combustion analysis apparatus for a large-sized low-speed engine, the apparatus being able to determine whether there is a problem with an engine by analyzing the combustion state of a large-sized low-speed 2-stroke or 4-stroke engine being applied in a ship, and the like and examining the combustion state of the engine from the analysis result, and a method for determining a combustion state of an engine using the same.

**Description of the Related Art**

In general, a ship engine monitoring device is rising as necessary equipment for maintenance of ship engines. In particular, ship engine monitoring devices necessarily
require a technology that minimize measurement errors to perform precise and accurate measurement on engines, and to this end, various measuring technologies have been developed. So, Document WO 2017 076450 A1 discloses engine control method to be used for detecting misfire in an internal combustion engine having at least one pressure sensor for in-cylinder pressure detection, and an electronic control unit. The engine control method comprises detecting an in-cylinder pressure, determining an engine crank position, calculating temperature index based on measured in-cylinder pressure and a cylinder volume as a function of measured engine position via the ideal gas law by the electronic control unit, determining from calculated temperature index within the current expansion stroke of the internal combustion engine whether or not a combustion event takes place in the current expansion stroke.
WO 2004 048761 A1 discloses a four-stroke combustion ignition engine comprising a diesel engine, and discloses a method of deriving a measure of engine shaft output comprising measuring cylinder pressure during a cylinder cycle, constructing a pressure variation function, obtaining a measure of work done on the piston in the cylinder therefrom, deriving the measure of shaft output from the measure of work done and identifying a measure of engine friction losses and subtracting these from the measure of work done on the piston to derive the measure of shaft output.
US 2017 082523 A1 discloses the engine torque estimator comprising a cylinder internal pressure sensor configured to detect a pressure in the cylinder as a cylinder internal pressure, an indicated-torque calculating unit configured to calculate an indicated torque on the basis of the detected cylinder internal pressure, a pump loss torque calculating unit configured to calculate a pump loss torque on the basis of the detected cylinder internal pressure and an engine torque calculating unit configured to calculate an engine torque of the internal combustion engine by using the calculated indicated torque and pump loss torque. The indicated-torque calculating unit and the pump loss torque calculating unit calculate the indicated torque and the pump loss torque relating to a current combustion cycle, respectively, on the basis of the cylinder internal pressure detected in a period from the exhaust stroke in a previous combustion cycle to the expansion stroke in the current combustion cycle.
FR 2 888 880 A1 discloses device for real-time detection of the beginning of the combustion phase of an internal combustion engine, particularly for a motor vehicle, characterized in that it comprises a means (20) for calculating a variable (C) representative of the evolution of the combustion as a function of the combustion chamber pressure and the crankshaft angle, and a means (23) for comparing said variable (C) with a threshold (S) so as to determine the state of the combustion of said engine, said variable (C) being a function of the derivative of the amount of energy (Q) present in the combustion chamber gases relative to the crankshaft angle (0).
us 2007/100534 A1 discloses an engine output calculation method comprises making a torque estimation model that defines a relation between indicated torque and characteristic values that indicate a flow of gas and a combustion state in an internal combustion engine, determining a value of a parameter relating to a heat-generation rate $dQ/d\theta$, which is a rate of change of a heating value Q in a cylinder with respect to a crank angle $\theta$ based on an operating condition, calculating the heat-generation rate $dQ/d\theta$ under a desired operating condition, using the value of the parameter and estimating the indicated torque of the internal combustion engine based on the torque estimation model, using the heat-generation rate $dQ/d\theta$.
An indicator for measuring the output of ship engines is representative of the measurement technology of ship engine monitoring device and is classified into a mechanical type and an electronic type.

A mechanical indicator has been generally used for ships in the related art, and is mounted on a test cock of an engine and performs measurement by drawing the pressure of a combustion chamber on paper and then calculating the area using a measurer called a planimeter. However, the mechanical indicator has a problem that there is an error of around about 10% between the actual state of an engine and the measurement result due to the proficiency of the person who performs measurement and an error of the measurer.

Accordingly, recently, electronic indicators compensating for the defects of mechanical indicators are generally used.

An electronic indicator measures the output of a ship engine, unlikely the mechanical indicator, by drawing a volume diagram through sampling on pressure for one cycle of the engine using digital equipment and by automatically calculating the area.

The electronic indicator samples pressure for one cycle of an engine through a time-based method or an angle-based method.

Sampling based on the time-based method is a method of collecting pressure values in accordance with a set time unit for one cycle of an engine and sampling based on the angle-based method means a method of collecting pressure values in accordance with a set angle unit for one cycle of an engine.

However, sampling based on the time-based method has a problem of causing a large top dead center (TDC) error because it ignores an instantaneous speed change of an engine.

Accordingly, sampling based on an angle-based method that collects pressure values using an angle sensor (encoder) that is installed at an end of a crankshaft is usually applied in the related art.

That is, ship engine monitoring devices of the related art diagnose the combustion state of an engine using an electronic pressure measurement technology employing the sampling technology based on the time-based method for accurate and precise measurement.

Accordingly, ship engine monitoring devices of the related art creates a Pθ graph showing pressure values at crank angles and a PV graph showing pressure values at combustion chamber volumes, using collected information, and measure and calculate compression pressure, maximum explosion pressure, output, etc. of cylinders, thereby diagnosing the combustion state of an engine.

However, the ship engine monitoring devices of the related art simply can only measures information such as a Pθ graph and a PV graph, so they have a limit in diagnosing the combustion state of various engines. Accordingly, there is a problem that an examiner can find out only limited information, so more accurate and precise diagnosis is not substantially achieved.

As for large-sized low-speed 4-stroke engines, unlike large-sized low-speed 2-stroke engines, there is no separate monitoring system and the state of the engines is determined by a Pmax gauge, or a temperature gauge or a pressure engine that are mounted on the engine, so it is difficult to diagnose the state of the engines.

## SUMMARY

The present disclosure has been made in an effort to solve the problems and an object of the present disclosure is to provide a combustion analysis apparatus for a large-sized low-speed engine, the apparatus being able to create various references that allows for determining the combustion sate of an engine, reducing fuel consumption of the engine by accurately and precisely examining combustion of the engine using the references, and easily maintaining and managing the engine, and a method for determining a combustion state of an engine using the apparatus.

In order to achieve the objects, a combustion analysis apparatus of a large-sized low-speed engine according to an embodiment of the present disclosure is a combustion analysis apparatus of a large-sized low-speed engine that performs combustion analysis on an engine for one cycle. The apparatus includes a combustion analyzer that collects combustion pressure of cylinders at rotation angles of a crankshaft from signal about individual combustion pressure of the cylinders and a signal about a rotation angle of the crank shaft that are input from the outside, and then analyzes and shows a combustion chamber volume, a pressure change rate, a heat generation rate, instantaneous speeds of the engine and combustion gas temperature in a plurality of graphs, in which the graphs include: a Pθ graph showing combustion pressure of the cylinders at the rotation angles of the crankshaft; a PV graph showing combustion pressure at combustion chamber volumes of the cylinders; a dP graph showing pressure change rates of the cylinders at the rotation angles of the crankshaft; a heat generation rate graph showing heat generation rates of the cylinder at the rotation angles of the crankshaft; a combustion gas temperature graph showing combustion gas temperature of the cylinders at the rotation angles of the crankshaft and an instantaneous speed change graph showing instantaneous speeds of the engine at the rotation angles of the crankshaft, and is characterized in that the apparatus further comprises a combustion examiner that determines air-fuel ratio states of fuel of the cylinders from the Pθ graph, the heat generation rate graph, and the combustion gas temperature graph, fuel injection states and fuel consumption states of the cylinders from the PV graph and the heat generation rate graph, fuel amount states of the cylinders from the PV graph and the combustion gas temperature graph, knocking of the engine and post-combustion in the cylinders from the dP graph, the heat generation rate graph, and the combustion gas temperature graph and whether maximum combustion pressure of the cylinders coincides from the instantaneous speed change graph and the Pθ graph.

The combustion analyzer may calculate combustion chamber volumes of the cylinders at the rotation angles of the crankshaft from the following Expressions 1 and 2,

[Expression 1]

$$V(i) = vc + s \times X(i)$$

(where V(i) is a combustion chamber volume at a rotation angle, vc is a gap volume, s is the cross-sectional area of a cylinder, X(i) is piston displacement for rotation of a crankshaft, and vc = $\frac{vh}{}$ (stroke volume) / (Comratio (compression ratio) - 1.0), vh = s × stroke (height from top dead center to bottom dead center), and s = 3.14 × bore$^2$/4), and

[Expression 2]

$$X(i) = rr \times [(1.0 - \cos(de)) + \frac{1.0 \times (1.0 - \cos(2de))}{4.0 \times ramda}]$$

(where rr is a crank radius, de is a crank angle, and ramda = $\ell$ (length of connecting rod) / rr).

The combustion analyzer may calculate the pressure change rates of the cylinders at the rotation angles of the crank shaft from the following Expression 3,

[Expression 3]

$$dP = \frac{P(i-2) - P(i+2) + 8.0 \times [P(i+1) - P(i-1)]}{12}$$

(where dP is a pressure change rate at a rotation angle, P is sampling pressure, and i is a rotation angle of the crankshaft).

The combustion analyzer may calculate heat generation rates of the cylinders at the rotation angles of the crankshaft from the following Expressions 4, 5, and 6,

[Expression 4]

$$ROHR = \frac{A}{\kappa - 1} \left( V \frac{dP}{d\theta} + \kappa P \frac{dV}{d\theta} \right)$$

(where ROHR (Rate of Heat Release) is a heat generation rate at a rotation angle, A = 1.0 / 42700.0, $\kappa$ is a specific heat ratio),

[Expression 5]

$$\kappa = C_0 + C_1 T + C_2 T^2 + \frac{C_3}{air}$$

(where $C_0$ = 1.4373, $C_1$ = -1.318 × 10$^{-4}$, $C_2$ = 3.12 × 10$^{-8}$, $C_3$ = -4.8 × 10$^{-2}$, $air$ is an excess air ratio, and T is combustion gas temperature at a rotation angle), and

[Expression 6]

$$dV(i) = dr \times (\frac{360}{\text{Encoder Resolution}}) \times s \times rr \times (\sin(de) + (\frac{1.0}{(2.0 \times ramda)} \times \sin(2.0 \times de)))$$

(where dV is a differentiated combustion chamber volume, dr = pai (3.141593) / 180, s = 3.14 $\times$ bore$^2$/4, rr is a crank radius, de is a rotation angle of the crankshaft, and ramda = $\ell$ (length of connecting rod) / rr).

The combustion analyzer may calculate combustion gas temperature of the cylinders at the rotation angles of the crankshaft from the following Expression 7,

[Expression 7]

$$T(i) = \frac{P(i)V(i)}{GR}$$

(where T(i) is combustion gas temperature at a rotation angle, G is gas weight, R is a gas constant, P(i) is combustion chamber pressure at a rotation angle, and V(i) is a combustion chamber volume at a rotation angle).

The gas weight G in Expression 7 may be calculated by the following Expression 8,

[Expression 8]

$$G = \frac{PV}{TR} \times ve$$

(where P is initial pressure, V is a combustion chamber volume, T is initial temperature, and ve is charging efficiency of intake air of an engine, in which charging efficiency of intake air of an engine of 0.8 is applied to four strokes and 0.75 is applied to two strokes).

The combustion analyzer may further show an instantaneous speed change graph by analyzing instantaneous speeds of the engine at the rotation angles of the crankshaft.

The combustion analyzer may calculate instantaneous speeds of the engine at the rotation angles of the crankshaft from the following Expression 9,

[Expression 9]

$$Instantaneous\ speed[rpm] = \frac{60}{encoder\ resolution \times (count\ clocktime) \times (count\ number)}$$

(where 'Instantaneous speed' is the instantaneous speed of the engine, 'encoder resolution' is the number of pulses (revolution) of an encoder, 'count clock time' is the speed of inter-pulse internal count signal, and 'count number' is the number of internal count signals calculated from the speed of inter-pulse internal count signals).

A method for determining a combustion state of an engine using a combustion analysis apparatus for a large-sized low-speed engine according to an embodiment of the present disclosure analyzes and shows a combustion state of the engine in a Pθ graph showing combustion pressure of cylinders at rotation angles of a crankshaft; a PV graph showing combustion pressure at combustion chamber volumes of the cylinders; a dP graph showing pressure change rates of the cylinders at the rotation angles of the crankshaft; a heat generation rate graph showing heat generation rates of the cylinder at the rotation angles of the crankshaft; a combustion gas temperature graph showing combustion gas temperature of the cylinders at the rotation angles of the crankshaft; and an instantaneous speed change graph showing instantaneous speeds of the engine at the rotation angles of the crankshaft. Further, the method includes: determining air-fuel ratio states of fuel of the cylinders from the Pθ graph, the heat generation rate graph, and the combustion gas temperature graph; determining fuel injection states and fuel consumption states of the cylinders from the PV graph and the heat generation rate graph; determining fuel amount states of the cylinders from the PV graph and the combustion gas temperature graph; determining knocking of the engine and post-combustion in the cylinders from the dP graph, the heat generation rate graph, and the combustion gas temperature graph; and determining whether maximum combustion pressure of the cylinders coincides from the instantaneous speed change graph and the Pθ graph.

According to embodiments of the present disclosure, combustion analysis on an engine is performed in various ways by providing a plurality of graphs and the combustion state of the engine is examined through the combustion analysis, so it is possible to check the accurate combustion state of the engine and accordingly it is possible to improve the lifespan and fuel consumption rate of the engine by maintaining the engine in an optimal state.

Further, since a plurality of various graphs is created and a combustion state of an engine is analyzed on the basis of the graphs, it is possible to more accurately analyze an engine in comparison to ship engine monitoring devices of the related art. Furthermore, it is possible to minimize work process and work time by removing other unnecessary work for additional checking.

Further, since it is possible to find out the combustion state of an engine by itself through a plurality of graphs without using an external checking agency or an external checking device, it is possible to continuously maintain and manage an engine and determine the maintenance time by itself, thereby being able to reduce the costs.

Further, since a plurality of graphs are created using expressions and the state of an engine can be examined from the graphs, the present disclosure can be applied to both of a large-sized low-speed 2-stroke engine and a large-sized low-speed 4-stroke engine, whereby usability and efficiency can be increased.

## BRIEF DESCRIPTION OF THE DRAWINGS

The above and other aspects, features and other advantages of the present disclosure will be more clearly understood from the following detailed description taken in conjunction with the accompanying drawings, in which:

FIG. 1 is a diagram schematically showing the configuration of a combustion analysis apparatus for a large-sized low-speed engine according to an embodiment of the present disclosure;

FIG. 2 is a diagram showing a combustion analysis result on a large-sized low-speed 2-stroke engine performed by a combustion analysis apparatus for a large-sized low-speed engine according to an embodiment of the present disclosure;

FIG. 3 is a diagram showing a combustion analysis result on a large-sized low-speed 4-stroke engine performed by a combustion analysis apparatus for a large-sized low-speed engine according to an embodiment of the present disclosure;

FIG. 4A is a diagram showing a $P\theta$ graph of a large-sized low-speed 4-stroke engine when there is remaining gas and FIG. 4B is a diagram showing a $P\theta$ graph of a large-sized low-speed 4-stroke engine in a normal state;

FIG. 5A is a diagram showing a dP graph of a large-sized low-speed 2-stroke engine and FIG. 5B is a diagram enlarging a section of FIG. 5A;

FIG. 6 is a diagram showing a dP graph of a large-sized low-speed 4-stroke engine when post-combustion is generated;

FIG. 7A is a diagram showing a heat generation rate graph of a large-sized low-speed 4-stroke engine in a normal state and FIG. 7B is a diagram showing a heat generation rate graph of a large-sized low-speed 4-stroke engine when post-combustion has been generated;

FIG. 8 is a diagram showing a temperature graph of a large-sized low-speed 2-stroke engine in a normal state;

FIG. 9A is a diagram showing a temperature graph of a large-sized low-speed 4-stroke engine when the differences in fuel amount of cylinders exceed a predetermined range and FIG. 9B is a diagram showing a temperature graph of a large-sized low-speed 4-stroke engine when the difference in fuel amount has been corrected but post-combustion has been generated;

FIG. 10A is a diagram showing a $P\theta$ graph of a large-sized low-speed 4-stroke engine when there is a difference in fuel injection time point of cylinders and FIG. 10B is a diagram showing a $P\theta$ graph of a large-sized low-speed 4-stroke engine when fuel injection time points of cylinders have been adjusted;

FIG. 11 is a diagram showing an instantaneous speed change graph before and after a fuel injection time point is adjusted; and

FIGS. 12 to 17 are flowcharts showing a method for determining a combustion state of an engine using a combustion analysis apparatus of a large-sized low-speed engine according to an embodiment of the present disclosure.

## DETAILED DESCRIPTION OF THE EMBODIMENT

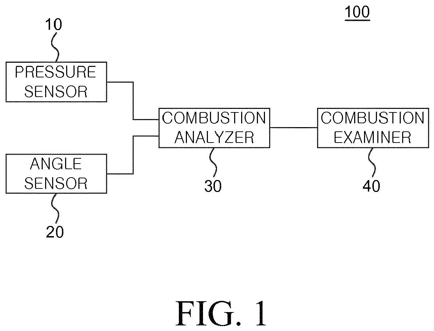

FIG. 1 is a diagram schematically showing the configuration of a combustion analysis apparatus for a large-sized low-speed engine according to an embodiment of the present disclosure.

Referring to FIG. 1, a combustion analysis apparatus 100 for a large-sized low-speed engine (hereafter, referred to as 'combustion analysis apparatus 100') according to an embodiment of the present disclosure, which is an apparatus that can provide a user with fundamental data for engine problem diagnosis by performing combustion analysis for one cycle of a large-sized low-speed 2-stroke engine or a large-sized low-speed 4-stroke engine, which are applied to ships etc., and by examining the combustion state of the engine using the analysis data, includes a combustion analyzer 30.

The combustion analyzer 30 is electrically connected with an external sensor, receives signals about individual combustion pressure of cylinders detected by the external sensor and a signal about the rotation angle of a crankshaft, and collects combustion pressure values of the cylinders at rotation angles of the crankshaft for one cycle of an engine from the received signals. The external sensor means a sensor that detects signals about individual combustion pressure of cylinders and a plurality of sensors that detects a signal about a rotation angle of a crankshaft, and may be selectively applied to the combustion analysis apparatus 100, if necessary.

The combustion analyzer 30 analyzes a combustion chamber volume, a pressure change rate, a heat generation rate, and combustion gas temperature of cylinders by introducing collected data into predetermined expressions, and shows these items in a plurality of graphs.

Analysis items analyzed by the combustion analyzer 30, and graphs are described in more detail hereafter.

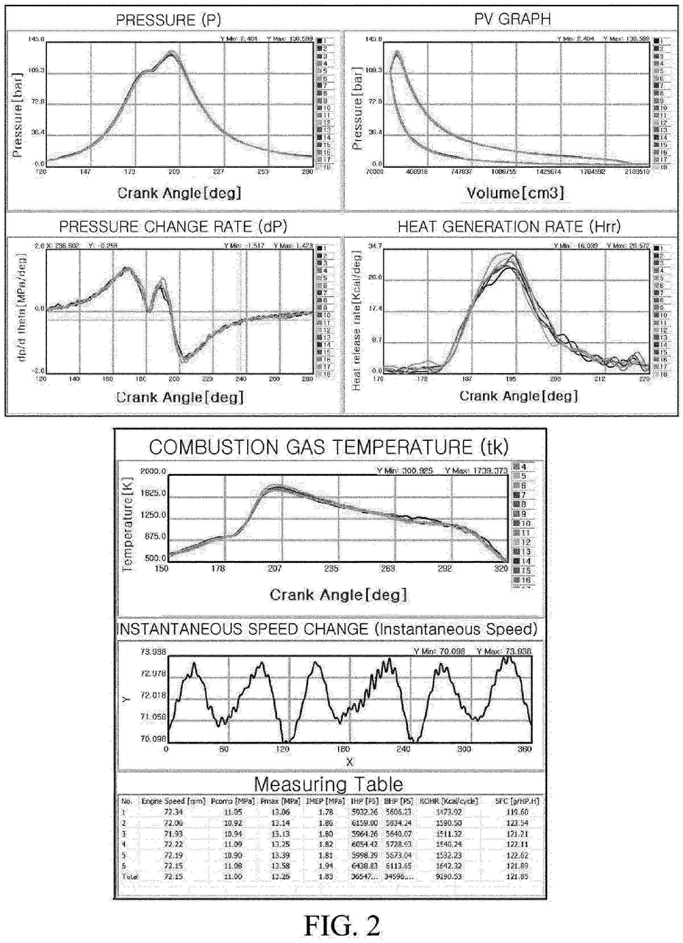

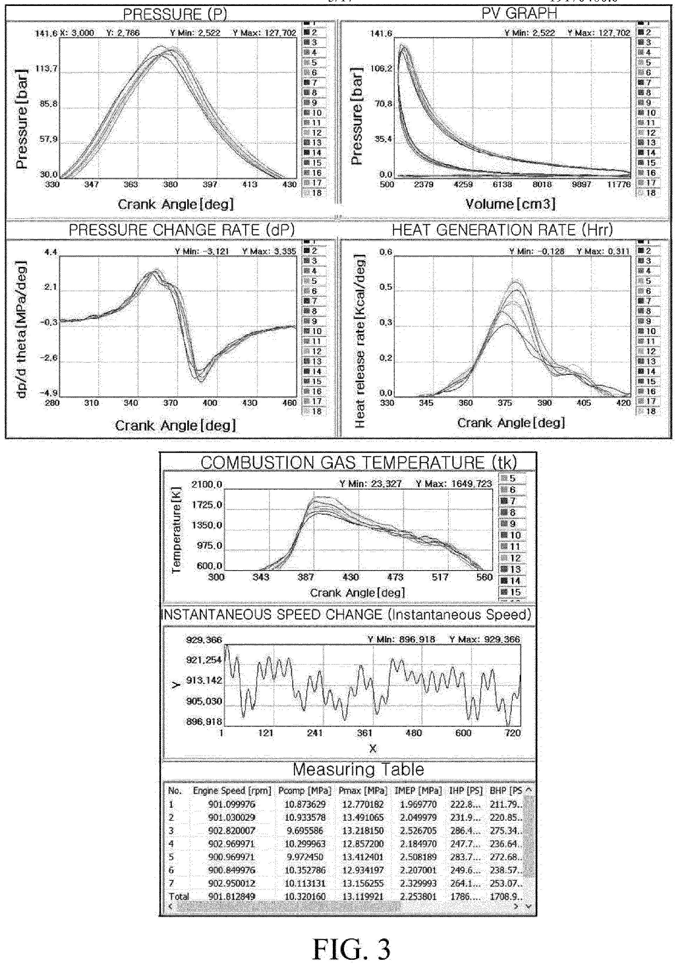

FIG. 2 is a diagram showing a combustion analysis result on a large-sized low-speed 2-stroke engine performed by a combustion analysis apparatus for a large-sized low-speed engine according to an embodiment of the present disclosure and FIG. 3 is a diagram showing a combustion analysis result on a large-sized low-speed 4-stroke engine performed by a combustion analysis apparatus for a large-sized low-speed engine according to an embodiment of the present disclosure.

Referring to FIGS. 2 and 3, the combustion analyzer 30 collects combustion pressure values of cylinders at rotation angles of a crankshaft for one cycle of an engine, taking a signal from an external sensor measuring the rotation angle of the crankshaft as a trigger, and then shows the result in a Pθ graph showing the rotation angle of the crankshaft for the cylinders on X-axis and the combustion pressure at the rotation angle on Y-axis. For reference, the crankshaft is set to rotate 360 degrees angles per one cycle of an engine when the engine that is analyzed by the combustion analysis apparatus 100 is a large-sized low-speed 2-stroke engine, and is set to rotate 720 degrees angles per one cycle of an engine when the engine is a large-sized low-speed 4-stroke engine.

The combustion analyzer 30 calculates combustion chamber volumes of the cylinders at the rotation angles of the crankshaft from the following Expressions 1 and 2 and, as shown in FIGS. 2 and 3, shows the combustion chamber volumes in a PV graph showing combustion pressure at the combustion chamber volumes of the cylinders. For reference, a combustion chamber volume, that is, an area in a PV graph may mean the output (indicated horsepower) of a cylinder. Accordingly, the sum of the horsepower of cylinders may mean the output of an engine.

[Expression 1]

$$V(i) = vc + s \times X(i)$$

where V(i) is a combustion chamber volume at a rotation angle, vc is a gap volume, s is the cross-sectional area of a cylinder, X(i) is piston displacement for rotation of a crankshaft, and vc = $\frac{vh}{}$ (stroke volume) / (Comratio (compression ratio) - 1.0), vh = s $\times$ stroke (height from top dead center to bottom dead center), and s = 3.14 $\times$ bore$^2$/4 may be defined. For example, 'i' indicating a crank angle may be set as 1°, 0.5°, 0.2°, etc., depending on sampling.

[Expression 2]

$$X(i) = rr \times [(1.0 - \cos(de)) + \frac{1.0 \times (1.0 - \cos(2de))}{4.0 \times ramda}]$$

where rr is a crank radius, de is a crank angle, and ramda = $\ell$ (length of connecting rod) / rr.

The combustion analyzer 30 calculates pressure change rates of the cylinders at the rotation angles of the crankshaft and, a shown in FIGS. 2 and 3, shows the pressure change rates in a dP graph showing the pressure change rates of the cylinders at the rotation angles of the crankshaft.

That is, the combustion analyzer 30, in order to find out fine changes in pressure that are difficult to find out from the Pθ graph, differentiates the combustion pressure values of the cylinders at the rotation angles of the crankshaft, using the following Expression 3, and shows the result in the dP graph.

[Expression 3]

$$dP = \frac{P(i-2) - P(i+2) + 8.0 \times [P(i+1) - P(i-1)]}{12}$$

where dP is a pressure change rate at a rotation angle, P is sampling pressure, and i is a rotation angle of a crankshaft. The term 'P' that indicates sampling pressure is absolute pressure. For example, when sampling pressure is P0, P = P0 + Patm (atmospheric pressure) may be defined.

The combustion analyzer 30 calculates heat generation rates of the cylinders at the rotation angles of the crankshaft from the following Expressions 4, 5 and 6 and, as shown in FIGS. 2 and 3, shows the heat generation rates in a heat generation rate graph showing the heat generation rates of the cylinders at the rotation angles of the crankshaft.

[Expression 4]

$$ROHR = \frac{A}{\kappa - 1} \left( V \frac{dP}{d\theta} + \kappa P \frac{dV}{d\theta} \right)$$

where ROHR (Rate of Heat Release) is a heat generation rate at a rotation angle, A = 1.0 / 42700.0, $\kappa$ is a specific heat ratio.

[Expression 5]

$$\kappa = C_0 + C_1 T + C_2 T^2 + \frac{C_3}{air}$$

where $C_0$ = 1.4373, $C_1$ = -1.318 $\times$ $10^{-4}$, $C_2$ = 3.12 $\times$ $10^{-8}$, $C_3$ = -4.8 $\times$ $10^{-2}$, **air** is an excess air ratio, and T is combustion gas temperature at a rotation angle. For reference, the combustion gas temperature T can be calculated from the ideal gas equation of state and a theoretical air amount of 14.5 kgf that is the theoretical air amount of diesel oil can be applied.

[Expression 6]

$$dV(i) = dr \times \left( \frac{360}{\text{Encoder Resolution}} \right) \times s \times rr \times \left( \sin(de) + \left( \frac{1.0}{(2.0 \times ramda)} \times \sin(2.0 \times de) \right) \right)$$

where dV is a differentiated combustion chamber volume, dr = pai (3.141593) / 180, s = 3.14 $\times$ $bore^2$/4, rr is a crank radius, de is a rotation angle of a crankshaft, and ramda = $\ell$ (length of connecting rod) / rr. For reference, the encoder resolution is the intrinsic pulse value of an encoder and all encoders having any resolution can be applied to Expression 6 by the term '360/encoder resolution'.

The combustion analyzer 30 calculates combustion gas temperature of the cylinders at the rotation angles of the crankshaft from the following Expression 7 and, as shown in FIGS. 2 and 3, shows the combustion gas temperature in a combustion gas temperature graph showing the combustion gas temperature of the cylinders at the rotation angles of the crankshaft.

That is, since combustion occurs for very short time in a combustion chamber, there is a limit in measuring combustion gas temperature in a combustion chamber using existing thermometers. Accordingly, the combustion analysis apparatus 100 can calculate the combustion gas temperature at the rotation angles of the crankshaft using the ideal gas equation of state.

[Expression 7]

$$T(i) = \frac{P(i) V(i)}{GR}$$

where T(i) is combustion gas temperature at a rotation angle, G is gas weight, R is a gas constant, P(i) is combustion chamber pressure at a rotation angle, and V(i) is a combustion chamber volume at a rotation angle.

The gas weight G in Expression 7 can be calculated by the following Expression 8.

[Expression 8]

$$G = \frac{PV}{TR} \times ve$$

where P is initial pressure (or scavenging pressure), V is a combustion chamber volume, T is initial temperature (or scavenging temperature), and ve is charging efficiency of intake air of an engine, in which charging efficiency of intake air of an engine of 0.8 is applied to four strokes and 0.75 is applied to two strokes. That is, the strokes of a 4-stroke engine are clear in comparison to the strokes of a 2-stroke engine, so charging efficiency of intake air of an engine higher than that of the 2-stroke engine can be applied. For example, it is assumed in this embodiment that the charging efficiency of intake air of a large-sized low-speed 4-stroke engine, in which valves are relatively accurately opened and closed in comparison to a large-sized low-speed 2-stroke engine because intake, compression, expansion, and exhaust strokes can be individually performed, is 80% and the volume efficiency of a large-sized low-speed 2-stroke engine, which has low efficiency in comparison to a large-sized low-speed 4-stroke engine due to remaining gas because it has intake holes instead of intake valves and two strokes are simultaneously performed during one stroke, is 75%.

The combustion analyzer 30 can further show an instantaneous speed change graph by analyzing the instantaneous speed of an engine at rotation angles of a crankshaft.

In more detail, the combustion analyzer 30 can calculate instantaneous speeds of an engine at rotation angles of a crankshaft for one cycle of the engine form the following Expression 9 and, as shown in FIGS. 2 and 3, can show the result in an instantaneous speed change graph showing instantaneous speed changes of an engine at rotation angles of a crankshaft for one cycle of the engine.

For reference, the instantaneous speed of an engine is changed by compression and explosion in cylinders, so the engine does not rotate at a constant speed for one revolution. Accordingly, since a large-sized low-speed engine to which the combustion analysis apparatus 100 is applied rotates at a low speed, the instantaneous speed changes by the number of cylinders for one revolution.

The instantaneous speed of an engine can be defined by the following Expression 9.

[Expression 9]

$$Instantaneous\ speed[rpm] = \frac{60}{encoder\ resolution \times (count\ clocktime) \times (count\ number)}$$

where 'Instantaneous speed' is the instantaneous speed of an engine, 'encoder resolution' is the number of pulses (revolution) of an encoder, 'count clock time' is the speed of inter-pulse internal count signal, and 'count number' is the number of internal count signals calculated from the speed of inter-pulse internal count signals.

The combustion analyzer 30 can further show a table including at least one analysis datum together with a plurality of graphs.

In more detail, the combustion analyzer 30 can analyze the combustion state of an engine and then show the measurement result in both of a plurality of graphs and a table including at least one datum of the number of revolutions (rpm) of the engine , maximum compression pressure (Pcomp), maximum combustion pressure (Pmax), a crank angle position at maximum combustion pressure, IMEP (Indicated Mean Effective Pressure), IHP (Indicated Horse Power), BHP (Brake Horse Power), ROHR (Rate Of Heat Release), and SFC (Specific Fuel Consumption) for cylinders.

The combustion analysis apparatus 100 may further include a plurality of sensors that detects signals about individual combustion pressure of cylinders and a rotation angle of a crankshaft.

In more detail, referring to FIG. 1, the combustion analysis apparatus 100 may further include a pressure sensor 10 that detects signals about individual combustion pressure of cylinders and an angle sensor 20 that detects a signal about a rotation angle of a crankshaft.

The pressure sensor 10 is installed at the test cock (not shown) of an engine and can detect individual combustion pressure of a plurality of cylinders (not shown) of the engine. The pressure sensor 10 is electrically connected with the combustion analyzer 30 and can transmit signals about the detected individual combustion pressure of the cylinders to the combustion analyzer 30.

The angle sensor 20 is installed at the end of a crankshaft (not shown) and detects the rotation angle of the crankshaft, and is electrically connected with the combustion analyzer 30 and can transmit a signal about the detected rotation angle of the crankshaft to the combustion analyzer 30. The installation position of the angle sensor 20 is not necessarily limited to an end of the crankshaft and may be any positions as long as it can detect the rotation angle of the crankshaft. When it is difficult to install the angle sensor 20 on a crankshaft, the angle sensor 20 may be replaced with a proximity sensor and installed on a flywheel (not shown). For example, the angle sensor 20 may be an encoder having predetermined resolution.

Though not shown in the drawings, an AD converter (not shown) that converts analog signals transmitted from the sensors into digital signals may be further provided between the plurality of sensors (the pressure sensor 10 and the angle sensor 20) and the combustion analyzer 30.

The combustion analysis apparatus 100 may further include a combustion examiner 40.

Referring to FIG. 1, the combustion examiner 40 is electrically connected with the combustion analyzer 30 and can determine the combustion state of an engine by examining at least two or more of a plurality of graphs created by the combustion analyzer 30.

In more detail, the combustion examiner 40 is electrically connected with the combustion analyzer 30 and can determine a fuel-air ratio state of fuel of cylinders, a fuel injection state of fuel of cylinders, a fuel consumption state of cylinders, a fuel amount state of cylinders, a knocking state of an engine, a post-combustion state of cylinders, and a combustion state of an engine related to at least one of whether the items of maximum combustion pressure of cylinders are matched by analyzing at least two or more of a plurality of graphs created by the combustion analyzer 30.

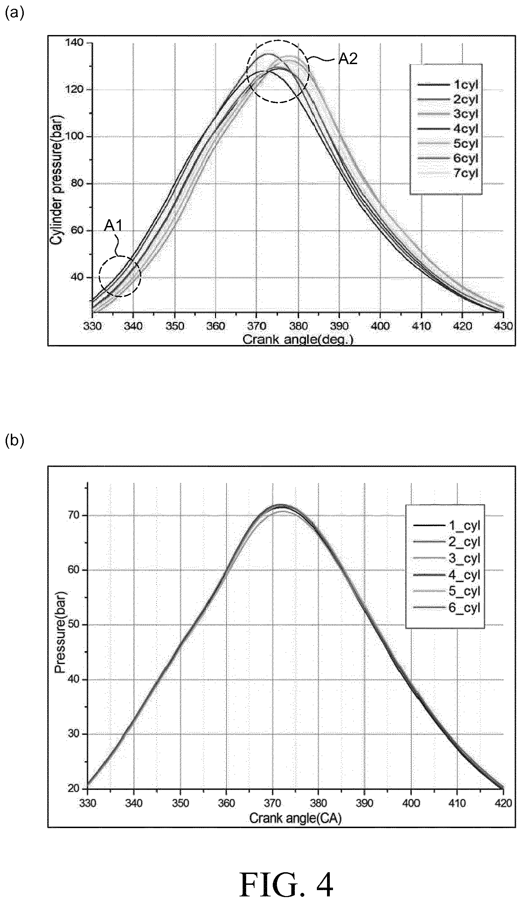

The combustion examiner 40 is described hereafter in more detail with reference to FIGS. 4 to 11.

FIG. 4A is a diagram showing a Pθ graph of a large-sized low-speed 4-stroke engine when there is remaining gas and FIG. 4B is a diagram showing a Pθ graph of a large-sized low-speed 4-stroke engine in a normal state.

Referring to FIG. 4, the combustion examiner 40 can find out maximum combustion pressure (Pmax) of cylinders from a Pθ graph. The combustion examiner 40 can also find out maximum compression pressure (Pcomp) when the engine to which the combustion analysis apparatus 100 is applied is a large-sized low-speed 2-stroke engine. For reference, when the combustion analysis apparatus 100 is applied to the large-sized low-speed 2-stroke engine, unlike an engine in which fuel is injected before a top dead center (TDC), it is an engine in which an injection time point of fuel has been adjusted after a TDC to decrease combustion chamber temperature, so it is possible to find out maximum compression pressure (Pcomp) from a Pθ graph by performing a process of compressing air in a combustion chamber before fuel is injected. However, when the engine is a large-sized low-speed 4-stroke engine, the injection time point of fuel is prior to the TDC, so it is impossible to find out maximum compression pressure.

The combustion examiner 40 can find out the differences in the degree of remaining gas in the combustion chambers of cylinders from a Pθ graph. For example, the combustion examiner 40 can find out the differences in degree of remaining gas in the combustion chambers of cylinders by checking differences of the cylinders at a point A1 where pressure starts to increase and a point A2 where an increase of pressure reaches a maximum level, as shown in FIG. 4A. That is, the pressure of a combustion chamber depends on temperature and scavenging pressure and scavenging pressure is the same under the same load, so the degree of a pressure increase is a difference in temperature. Accordingly, the cylinder having a lot of remaining gas in the combustion chamber quickly increases in pressure, so it is possible to find out the differences in degree of remaining gas in the combustion chambers of cylinders from the differences in degree of an increase of combustion pressure.

The combustion examiner 40 can determine a fuel-air ratio state of fuel by examining the degree of remaining gas in the combustion chamber of cylinders on the basis of a Pθ graph, together with a heat generation rate graph and a combustion gas temperature graph to be described below. That is, the combustion examiner 40 can determine a fuel-air ratio state of fuel of cylinders by comparing the differences in degree of remaining gas in the combustion chambers of the cylinders, the differences in heat generation rate of the cylinders, and the differences in combustion gas of the cylinders.

For example, as shown in FIG. 4A, when the differences of cylinders are large in a Pθ graph and the differences of cylinders at the same crank angle are large in a heat generation rate graph and a combustion gas temperature graph, the combustion examiner 40 can determine that the fuel-air state of fuel is insufficient. In contrast, as shown in FIG. 4B, when there is little difference of cylinders in a Pθ graph and there is little difference of cylinders at the same crank angle in a heat generation rate graph and a combustion gas temperature graph, the combustion examiner 40 can determine that the fuel-air state of fuel is satisfactory.

The combustion examiner 40 can find out the differences in fuel injection time point and fuel amount of cylinders from a PV graph, a heat generation rate graph, and a combustion gas temperature graph.

In more detail, the combustion examiner 40 can find out the differences in output of cylinders from a PV graph and can find out the differences in fuel injection time point of the cylinders by examining the difference in output on the basis of a heat generation rate graph. The combustion examiner 40 can find out the differences in output of cylinders from a PV graph with the fuel injection time points of the cylinders coinciding, and can find out the differences in fuel amount of the cylinders by examining the differences in output on the basis of a combustion gas temperature graph.

The process of finding out the differences in fuel injection time point of cylinders on the basis of a heat generation rate graph and the process of finding out the differences in fuel amount of cylinders on the basis of a combustion gas temperature graph will be described in more detail with description of a process of examining a heat generation rate graph a combustion gas temperature graph to be described below.

That is, differences in output of cylinders shown in a PV graph are caused by differences in fuel amount or differences in fuel injection time point. Accordingly, differences in output of cylinders generated when the fuel injection time points of the cylinders coincide can be considered as differences in fuel amount of the cylinders.

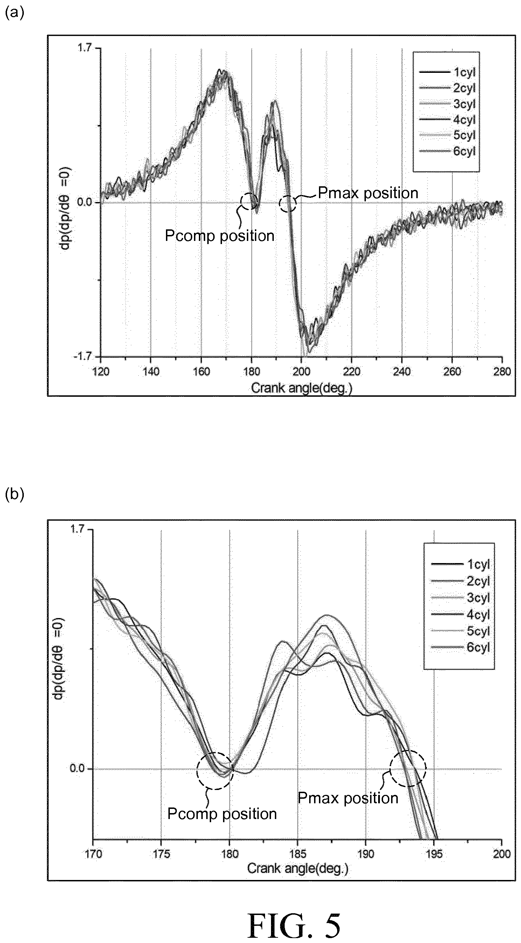

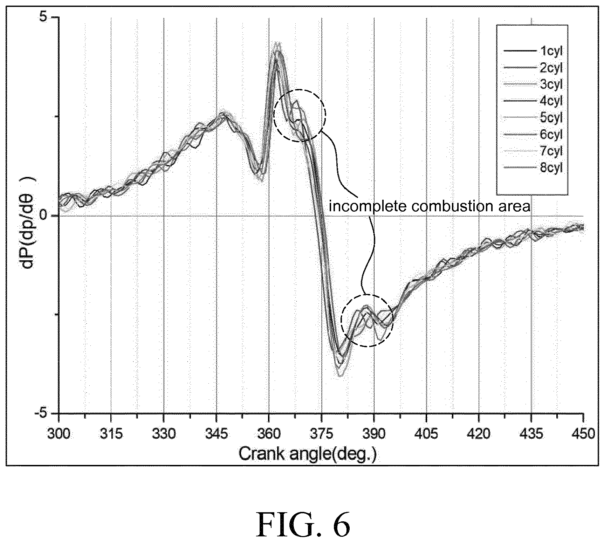

FIG. 5A is a diagram showing a dp graph of a large-sized low-speed 2-stroke engine, FIG. 5B is a diagram enlarging a section of FIG. 5A, and FIG. 6 is a diagram showing a dP graph of a large-sized low-speed 4-stroke engine when post-combustion is generated.

Referring to FIG. 5, the combustion examiner 40 can find out combustion characteristics of cylinders from a dP graph.

That is, the combustion examiner 40 can find out maximum combustion pressure (Pmax) of cylinders from a dP graph. The combustion examiner 40 can also find out maximum compression pressure (Pcomp) when the engine to which the combustion analysis apparatus 100 is applied is a large-sized low-speed 2-stroke engine. For reference, as shown in FIGS. 5A and 5B, when an engine is a large-sized low-speed 2-stroke engine, a point where dp/dθ = 0 shows up at two points in a dP graph, in which the point showing up earlier around to crank angle 180 degrees is the position of maximum compression pressure (Pcom position) and the point showing second is the position of maximum combustion pressure (Pmax position). However, though not shown in FIG. 5, when the engine is a large-sized low-speed 4-stroke engine, a point where dp/dθ = 0 shows up at one point in the dP graph.

Referring to FIG. 6, the combustion examiner 40 can find out whether there is knocking of an engine and whether there is post-combustion in cylinders by simultaneously examining a dP graph, a heat generation rate graph, and a combustion gas temperature graph.

Fro example, referring to FIG. 6, when an incomplete combustion area in which a large pressure difference of cylinders is generated at a plurality of points is found out, as shown in circles after the maximum combustion pressure in a dP graph, and differences of cylinders at the same crank angle are large in a heat generation rate graph and in a combustion gas temperature graph, the combustion examiner 40 can determine that knocking occurs in the engine and post-combustion occurs in the cylinders.

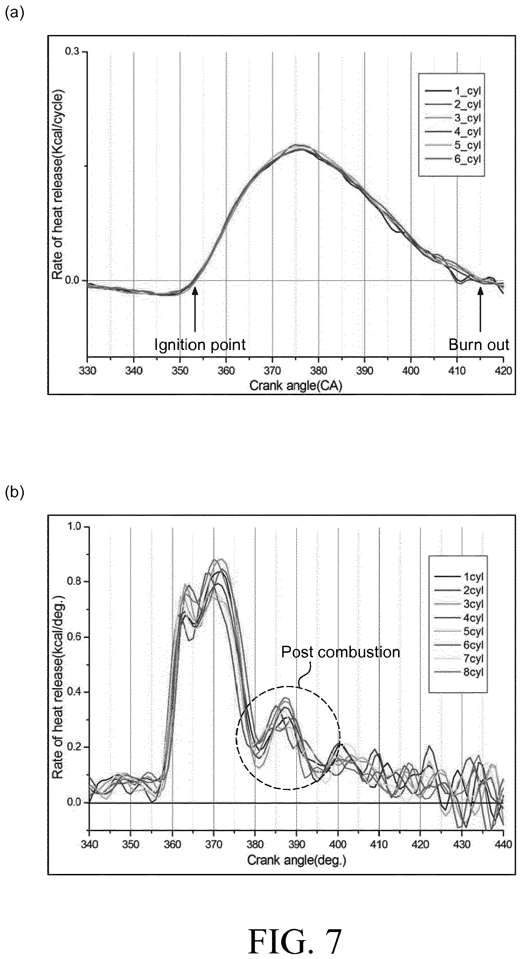

FIG. 7A is a diagram showing a heat generation rate graph of a large-sized low-speed 4-stroke engine in a normal state and FIG. 7B is a diagram showing a heat generation rate graph of a large-sized low-speed 4-stroke engine when post-combustion has been generated.

Referring to FIG. 7A, the combustion examiner 40 can find out fuel ignition time points and fuel extinguishment time points of cylinders from a heat generation rate graph.

In more detail, the combustion examiner 40 can find out fuel ignition time points of cylinders by finding out a point (Ignition point) where cylinders change into a plus (+) value from a minus (-) value in the heat generation rate graph. That is, since fuel injected into a combustion chamber loses heat while being evaporated by latent heat of vaporization upon entering the combustion chamber, a minus value shows up at the moment when injected fuel is evaporated and a plus value shows up at the moment when the fuel is ignited in a heat generation rate graph.

On the other hand, the combustion examiner 40 can find out fuel extinguishment time points of cylinders by finding out a point (Burn out) where cylinders change into a minus (-) value from a plus (+) value in the heat generation rate graph.

The combustion examiner 40 can also find out fuel injection time points of cylinders from the heat generation rate graph.

In more detail, the combustion examiner 40 can find out an ignition delay period of fuel from the fuel ignition time points of cylinders and can find out the fuel injection time points of the cylinders by tracing back the ignition delay period. That is, the combustion examiner 40 can find out an ignition delay period until fuel is injected into a combustion chamber and ignited from the fuel ignition time points of cylinders, whereby it can find out the fuel injection time points of the cylinders by inferring air supply temperature and pressure that are proportioned to the fuel delay period of fuel. Accordingly, the ignition delay period of fuel is the same under the same load, so differences in ignition time point of cylinders can be differences in fuel injection time point.

The combustion examiner 40 can also find out fuel consumption amounts of cylinders from the heat generation rate graph. In more detail, the combustion examiner 40 can find out fuel consumption amounts of cylinders by calculating the areas between the fuel ignition time points and the fuel extinguishment time points of the cylinders. For reference, the area of a heat generation rate graph is calculated in Kcal/deg, and when the area is calculated into a low calorific value and a braking horse power (BHP), it becomes the fuel consumption amount of cylinders.

The combustion examiner 40 can also find out whether there is knocking in an engine and post-combustion in cylinders by examining the heat generation rate graph with a dP graph and a combustion gas temperature graph.

For example, referring to FIG. 7B, when post-combustion point (Post combustion), where the heat generation rates of cylinders re-rise, is found, as shown in the circle in a heat generation rate graph, and differences of cylinders at the same crank angle are large in a dP rate graph and in a combustion gas temperature graph, the combustion examiner 40 can determine that knocking occurs in the engine and post-combustion occurs in the cylinders.

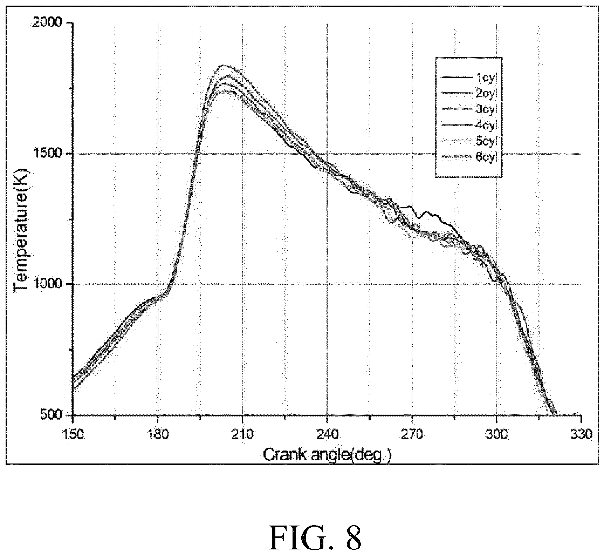

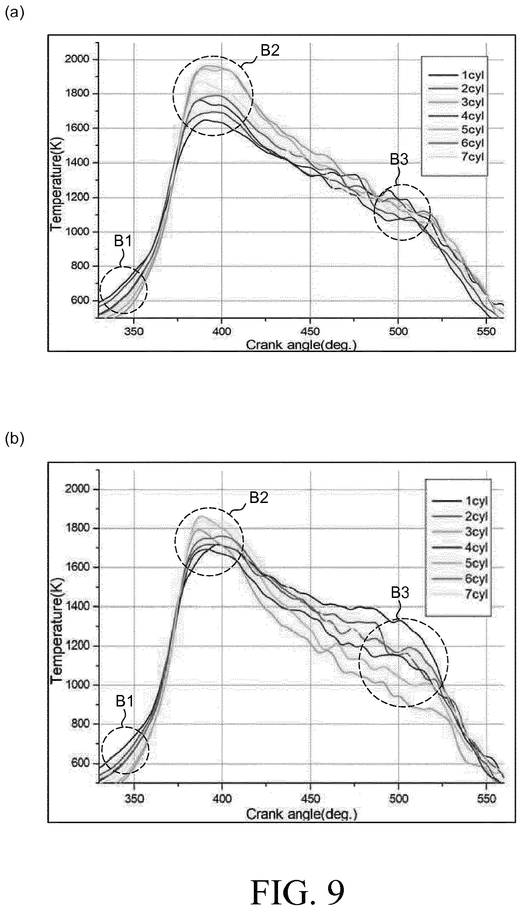

FIG. 8 is a diagram showing a temperature graph of a large-sized low-speed 2-stroke engine in a normal state, FIG. 9A is a diagram showing a temperature graph of a large-sized low-speed 4-stroke engine when the differences in fuel amount of cylinders exceed a predetermined range, and FIG. 9B is a diagram showing a temperature graph of a large-sized low-speed 4-stroke engine when the difference in fuel amount has been corrected but post-combustion has been generated.

Referring to FIGS. 8 and 9A, the combustion examiner 40 can find out the fuel consumption amount of cylinders from a combustion gas temperature graph and a PV graph.

That is, the combustion examiner 40 finds out the degree of fuel amount of cylinders by comparing temperature differences of the cylinders at a plurality of points B1, B2, and B3 in a combustion gas temperature graph, as shown in FIG. 9A, and compares the degree of fuel amount with the area of a PV graph, thereby being able to determine whether the fuel amounts of the cylinders are large or small. In more detail, the combustion examiner 40 finds out temperature differences of cylinders around initial combustion temperature (B1), temperature differences of the cylinders around maximum combustion temperature (Tmax) showing up between maximum combustion pressure (at 15 degrees after the TDC) of 25 and 30 degrees, and temperature differences of the cylinders around latter combustion temperature (B3) from a combustion gas temperature graph, and compares the differences with the area of a PV graph, thereby being able to determine the fuel amount states of the cylinders.

For example, referring to the portion around the maximum combustion temperature in FIG. 8, it is found out that the fuel amount of the sixth cylinder is relatively larger than those of other cylinders, but differences of the cylinders are not large around the initial combustion temperature and the latter combustion temperature, so it is possible to determine that the fuel amounts of the cylinders are generally satisfactory. For reference, the examination on FIG. 8 is a result under the assumption that differences of the cylinders are satisfactory in the heat generation rate graph and the dP graph.

The combustion examiner 40 can determine whether there is knocking in an engine and post-combustion in cylinders by examining the combustion gas temperature graph with the heat generation rate graph and the dP graph. In more detail, the temperature in an expansion process after the maximum combustion temperature is related to post-combustion, and accordingly, the combustion examiner 40 can determine post-combustion by finding out the maximum combustion temperature and graph differences of cylinders immediately before exhaust valves are opened, and by simultaneously analyzing them with the heat generation rate graph and the dP graph.

For example, referring to FIG. 9A, since it is found out that differences of cylinders are large around the maximum combustion temperature (B2) in the combustion gas temperature graph, when differences of cylinders at the same crank angle are large in the heat generation rate graph and the dP graph, the combustion examiner 40 can determine that the fuel amounts of the cylinders are generally not satisfactory. Referring to FIG. 9B, since it is found out that differences of cylinders were reduced around the maximum combustion temperature (B2), but differences of the cylinders are large around the latter combustion temperature (B3) in the combustion gas temperature graph, when differences of cylinders at the same crank angle are large in the heat generation rate graph and the dP graph, the combustion examiner 40 can determine that post-combustion has occurred in specific cylinders. That is, from FIG. 9B, it can be seen that differences temperature of the cylinders are very large before exhaust valves are opened and it can be seen that an expansion process normally occurs in the second and fifth cylinders during an expansion process, but post-combustion occurs in the first cylinder.

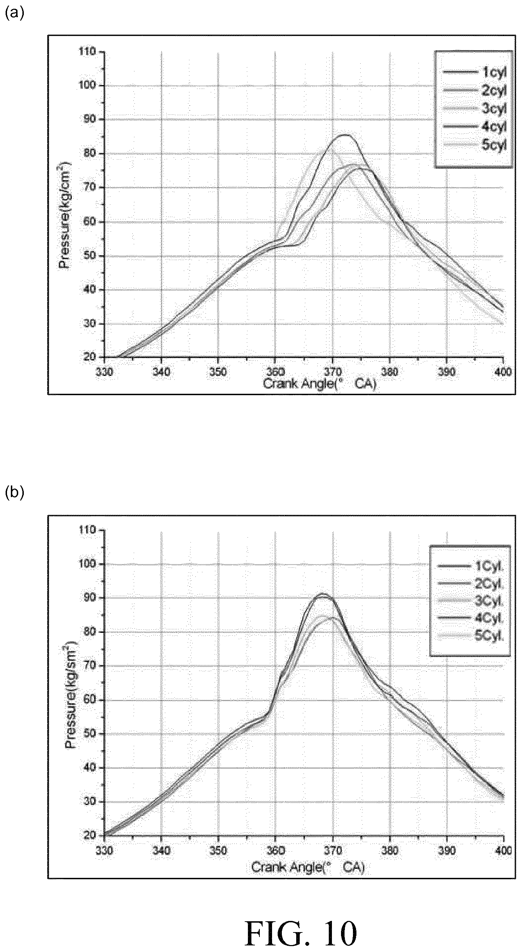

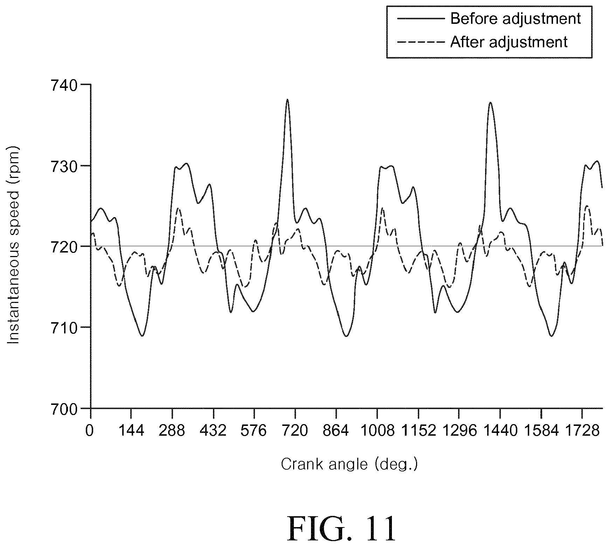

FIG. 10A is a diagram showing a Pθ graph of a large-sized low-speed 4-stroke engine when there is a difference in fuel injection time point of cylinders, FIG. 10B is a diagram showing a Pθ graph of a large-sized low-speed 4-stroke engine when fuel injection time points of cylinders have been adjusted, and FIG. 11 is a diagram showing an instantaneous speed change graph before and after a fuel injection time point is adjusted.

Referring to FIGS. 10 and 11, the combustion examiner 40 can determine whether maximum combustion pressure of cylinders coincides from an instantaneous speed change graph and a Pθ graph.

In more detail, the combustion examiner 40 can determine whether the maximum combustion temperature of the cylinders coincides by finding out differences in amplitude between a reference instantaneous speed change graph measured when the engine is in a normal state and an instantaneous speed change graph measured in real time, and finding out position differences of the maximum combustion pressure of the cylinders in the Pθ graph. That is, the smaller the difference in amplitude between the reference instantaneous speed change graph and the real-time measured instantaneous speed change graph, the position differences of the maximum combustion pressure of the cylinders can be reduced in the Pθ graph.

The combustion examiner 40 can further find out whether fuel injection time points of the cylinders coincide, whether miss fire is generated, whether TDCs coincide, whether the engine generates vibration and noise, etc. through the above process.

For example, referring to FIGS. 10A and 11, it is found out that the differences in the positions of maximum combustion pressure of the cylinders are large and the amplitudes between an instantaneous speed change graph of the engine before adjustment (Before adjustment in FIG. 11) and the reference instantaneous speed change graph (not shown) are large, the combustion examiner 40 can determine that there is differences in fuel injection time point of the cylinders and the engine generates vibration and noise over a predetermined level. On the other hand, referring to FIGS. 10B and 11, it is found out that the positions of maximum combustion pressure of the cylinders almost coincide and the amplitudes between an instantaneous speed change graph of the engine after adjustment (After adjustment in FIG. 11) and the reference instantaneous speed change graph are small, the combustion examiner 40 can determine that the fuel injection time points of the cylinder and the state of the engine are normal. For reference, the reference instantaneous speed change graph may have a straight or a waveform created in consideration of the engine in a normal state.

A method for determining a combustion state of an engine (hereafter, referred to as a 'method for determining a combustion state of an engine') using a combustion analysis apparatus for a large-sized low-speed engine according to an embodiment of the present disclosure is described hereafter.

For reference, components for describing the method for determining a combustion state of an engine are given the same reference numerals used for describing the combustion analysis apparatus for the convenience of description, and the same or repeated description is not provided.

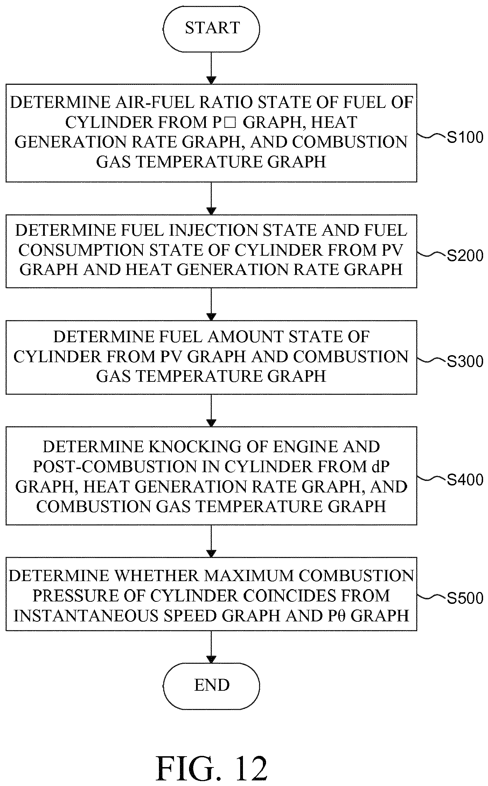

FIGS. 12 to 17 are flowcharts showing a method for determining a combustion state of an engine using a combustion analysis apparatus of a large-sized low-speed engine according to an embodiment of the present disclosure.

Referring to FIGS. 1 to 12, the method for determining a combustion state of an engine is performed by the combustion analysis apparatus 100 for a large-sized low-speed engine.

The combustion analysis apparatus 100 for a large-sized low-speed engine includes: a pressure sensor 10 that performs combustion analysis on an engine for one cycle, in detail, detects individual combustion pressure of cylinders; an angle sensor 20 that detects a rotation angle of a crankshaft; a combustion analyzer 30 that receives signals detected from the pressure sensor 10 and the angle sensor 20, collects combustion pressure of the cylinders at rotation angles of the crankshaft from the received signals, and analyzes and shows combustion chamber volumes, pressure change rates, heat generation rates, and combustion gas temperature of the cylinders, and a instantaneous speed change rate of the engine in a plurality of graphs; and a combustion examiner 40 that determines a combustion state of the engine by examining at least two or more of the graphs. The graphs that are shown by the combustion analyzer 30 includes: a $P\theta$ graph showing combustion pressure of the cylinders at rotation angles of the crankshaft; a PV graph showing combustion pressure at combustion chamber volumes of the cylinders; a dP graph showing pressure change rates of the cylinders at the rotation angles of the crankshaft; a heat generation rate graph showing heat generation rates of the cylinder at the rotation angles of the crankshaft; a combustion gas temperature graph showing combustion gas temperature of the cylinders at the rotation angles of the crankshaft; and an instantaneous speed change graph about the instantaneous speeds of the engine at the rotation angles of the crankshaft.

The method for determining a combustion state of an engine using the combustion analysis apparatus 100 for a large-sized low-speed engine (hereafter, referred to as 'combustion analysis apparatus 100') is described in more detail hereafter.

For reference, the combustion state of an engine determined by the method for determining a combustion state of an engine may be determined, depending on the result of comparing graphs, as one of 'insufficient', 'satisfactory', and 'excessive' or as whether there are specific subjects, but is not necessarily limited thereto and may be changed and applied in various ways.

First, the combustion analysis apparatus 100 determines an air-fuel ratio state of fuel of cylinders from a $P\theta$ graph, a heat generation rate graph, and a combustion gas temperature graph (S100).

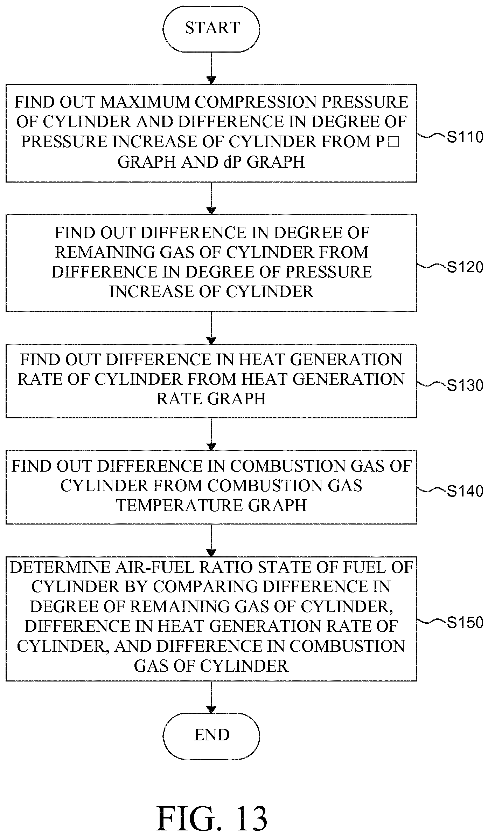

In more detail, referring to FIG. 13, the combustion analysis apparatus 100 can find out maximum compression pressure (Pmax) of the cylinders and differences in pressure increase of the cylinders from the $P\theta$ graph and a dP graph (S110). When the engine for measurement is a large-sized low-speed 2-stroke engine, maximum compression pressure (Pcomp) can also be found out. The combustion analysis apparatus 100 can find out differences in remaining gas of the cylinders from the differences in pressure increase of the cylinders (S120). That is, the pressure of a combustion chamber depends on temperature and scavenging pressure and scavenging pressure is the same under the same load, so the degree of a pressure increase is a difference in temperature. Accordingly, the cylinder having a lot of remaining gas in the combustion chamber quickly increases in pressure, so it is possible to find out the differences in degree of remaining gas in the combustion chambers of cylinders from the differences in degree of an increase of combustion pressure. The combustion analysis apparatus 100 can find out differences in heat generation rate of the cylinders from a heat generation rate graph (S130) and find out differences in combustion gas of the cylinders from a combustion gas temperature graph (S140). The combustion analysis apparatus 100 can determine the air-fuel ratio states of fuel of the cylinders by comparing the differences in remaining gas of the cylinders, the differences in heat generation rate of the cylinders, and the differences in combustion gas of the cylinders and then finding out the degrees of correspondence of the differences (S150).

Referring to FIG. 12 again, the combustion analysis apparatus 100 determines fuel injection states and fuel consumption states of the cylinders from a PV graph and the heat generation rate graph (S200).

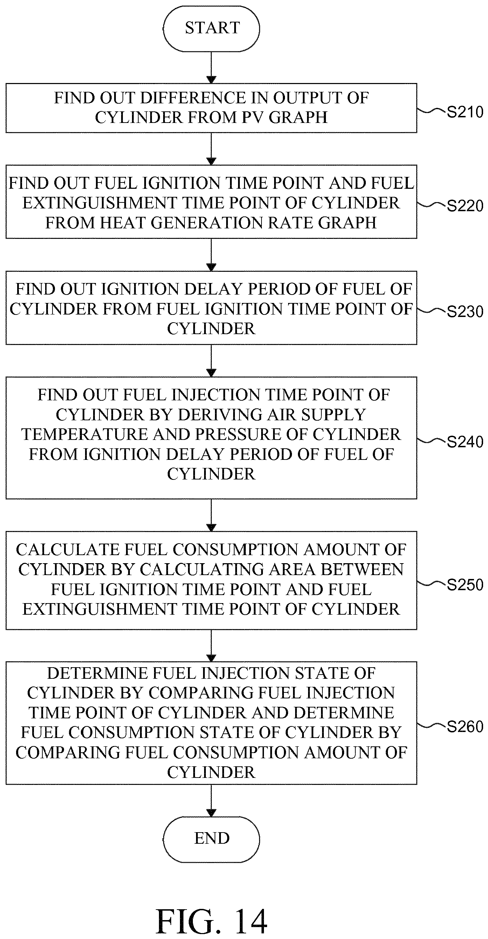

In more detail, referring to FIG. 14, the combustion analysis apparatus 100 can find out differences in output of the cylinders from the PV graph (S210) and can find out fuel ignition time points and fuel extinguishment time points of the cylinders from the heat generation rate graph (S220). For reference, the combustion analysis apparatus 100 can find out the fuel ignition time points of the cylinders on the basis of points where heat changes into a plus (+) value from a minus (-) value and can find out the fuel extinguishment time points of the cylinders on the basis of points where heat changes into a minus (-) value from a plus (+) value. The combustion analysis apparatus 100 can find out ignition delay periods of fuel of the cylinders from the fuel ignition time points of the cylinders (S230) and can find out fuel injection time points of the cylinders by deriving air supply temperature and pressure of the cylinders from the ignition delay periods of fuel of the cylinders (S240). That is, since the ignition delay period of fuel is the same under the same load, differences in ignition time point of cylinders can be differences in fuel injection time point. The combustion analysis apparatus 100 can calculate the fuel consumption amounts of the cylinders by calculating the areas between the fuel ignition time points and the fuel extinguishment time point of the cylinders (S250). For reference, the area of a heat generation rate graph is calculated in Kcal/deg, and when the area is calculated into a low calorific value and a braking horse power (BHP), the fuel consumption amounts of the cylinder can be calculated. The combustion analysis apparatus 100 can determine fuel injection states of the cylinders by comparing the fuel injection time points of the cylinders and determine fuel consumption states of the cylinders by comparing the fuel consumption amounts of the cylinders (S260).

Referring to FIG. 12 again, the combustion analysis apparatus 100 determines fuel amount states of the cylinders from the PV graph and the combustion gas temperature graph (S300) .

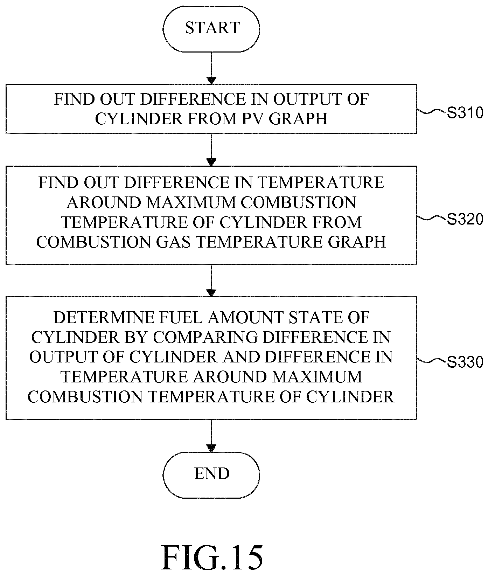

In more detail, referring to FIG. 15, the combustion analysis apparatus 100 can find out differences in output of the cylinders from the PV graph (S310) and can find out temperature differences around maximum combustion temperature (Tmax) of the cylinders from the combustion gas temperature graph (S320). For example, the combustion analysis apparatus 100 can find out differences in fuel amount of the cylinders from differences in degree of temperature values around maximum combustion temperature showing up between the maximum combustion pressure (at 15 degrees after a TDC) of 25 to 30 degrees. The combustion analysis apparatus 100 can determine the fuel amount states of the cylinders by comparing differences in output of the cylinders and differences in temperature around maximum combustion temperature of the cylinders (S330).

Referring to FIG. 12 again, the combustion analysis apparatus 100 determines knocking of the engine and post-combustion in the cylinders from the dP graph, the heat generation rate graph, and the combustion gas temperature graph (S400).

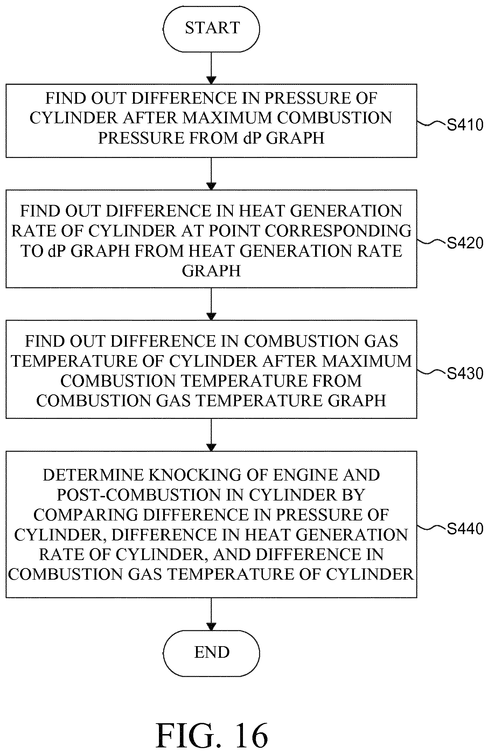

In more detail, referring to FIG. 16, the combustion analysis apparatus 100 can find out differences in pressure of the cylinder after the maximum combustion pressure from the dP graph (S410). The combustion analysis apparatus 100 can find out differences in heat generation rate of the cylinders at points corresponding to the dP graph (points with the same crank angle) from the heat generation rate graph and can find out differences in combustion gas temperature of the cylinders after the maximum combustion temperature from the combustion gas temperature graph (S430). The combustion analysis apparatus 100 can determine knocking of the engine and post-combustion in the cylinders by comparing the differences in pressure of the cylinders, the differences in heat generation rate of the cylinders, and the differences in combustion gas temperature of the cylinders (S440). That is, the combustion analysis apparatus 100 can find out post-combustion by analyzing temperature differences in an expansion process after the maximum combustion temperature (the maximum combustion temperature and temperature differences of the cylinders immediately before exhaust valves are opened) simultaneously with differences in heat generation rate and pressure of the cylinders at the same points.

Referring to FIG. 12 again, the combustion analysis apparatus 100 determines whether the maximum combustion pressure of the cylinders coincides from the instantaneous speed change graph and the Pθ graph (S500).

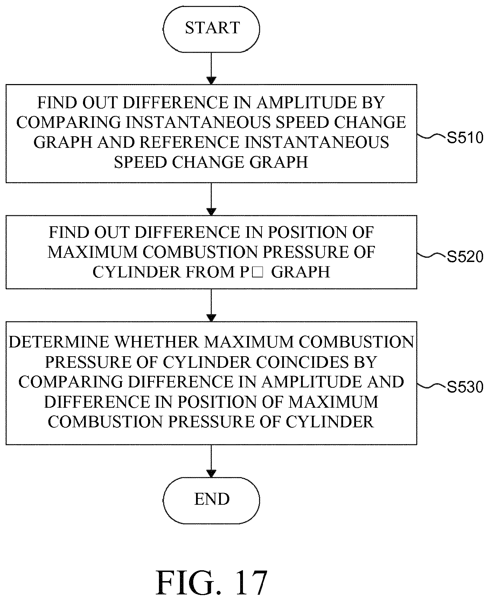

In more detail, referring to FIG. 17, the combustion analysis apparatus 100 can find out differences in amplitude by comparing the instantaneous speed change graph and a reference instantaneous speed change graph (S510) and can find out differences in position of the maximum combustion pressure of the cylinders from the Pθ graph (S520) . The combustion analysis apparatus 100 can determine whether the maximum combustion pressure of the cylinders coincides by comparing the differences in amplitude and the differences in position of the maximum combustion pressure of the cylinders (S530). Accordingly, the combustion analysis apparatus 100 can further find out whether fuel injection time points of the cylinders coincide, whether miss fire is generated, whether TDCs coincide, whether the engine generates vibration and noise, etc.

Meanwhile, the method for determining a combustion state of an engine may be implemented in a form of program commands that may be executed through various computer means and may be recorded in computer-readable recording media. The recording media may include program commands, data files, data structures, etc. The program commands that are recorded on the recording media may be those specifically designed and configured for the present disclosure or may be those available and known to those engaged in computer software in the art. For example, the recording media may include magnetic media such as hard disks, floppy disks, and magnetic tape, optical media such as CD-ROMs and DVDs, magneto-optical media such as floptical disks, and hardware devices specifically configured to store and execute program commands, such as ROM, RAM, and flash memory. The program commands may include not only machine language codes compiled by a compiler, but also high-level language codes that can be executed by a computer using an interpreter. Further, a hardware device may be configured to operate as one or more software modules to perform the operation of the present disclosure.

Further, the method for determining a combustion state of an engine may be implemented as a computer program or an application that is stored on recording media and executed by a computer.

According to embodiments of the present disclosure, combustion analysis on an engine is performed in various ways by providing a plurality of graphs and the combustion state of the engine is examined through the combustion analysis, so it is possible to check the accurate combustion state of the engine and accordingly it is possible to improve the lifespan and fuel consumption rate of the engine by maintaining the engine in an optimal state.

Further, since a plurality of various graphs is created and a combustion state of an engine is analyzed on the basis of the graphs, it is possible to more accurately analyze an engine in comparison to ship engine monitoring devices of the related art. Furthermore, it is possible to minimize work process and work time by removing other unnecessary work for additional checking.

Further, since it is possible to find out the combustion state of an engine by itself through a plurality of graphs without using an external checking engine or an external checking device, it is possible to continuously maintain an engine and determine the maintenance time by itself, thereby being able to reduce the costs.

Further, since a plurality of graphs is created using expressions and the state of an engine can be examined from the graphs, the present disclosure can be applied to both of a large-sized low-speed 2-stroke engine and a large-sized low-speed 4-stroke engine, whereby usability and efficiency can be increased.

**Claims**

1. A combustion analysis apparatus (100) of a large-sized low-speed engine that performs combustion analysis on an engine for one cycle, the apparatus (100) comprising a combustion analyzer (30) that collects combustion pressure values of cylinders at rotation angles of a crankshaft from signal about individual combustion pressure of the cylinders and a signal about a rotation angle of the crankshaft that are input from the outside, and then analyzes and shows a combustion chamber volume, a pressure change rate, a heat generation rate, instantaneous speeds of the engine and combustion gas, for the cylinders, in a plurality of graphs,
   wherein the graphs include:

   a $P\theta$ graph showing combustion pressure of the cylinders at the rotation angles of the crankshaft;
   a PV graph showing combustion pressure at combustion chamber volumes of the cylinders;
   a dP graph showing pressure change rates of the cylinders at the rotation angles of the crankshaft;
   a heat generation rate graph showing heat generation rates of the cylinders at the rotation angles of the crankshaft;
   a combustion gas temperature graph showing combustion gas temperatures of the cylinders at the rotation angles of the crankshaft and

   an instantaneous speed change graph showing instantaneous speeds of the engine at the rotation angles of the crankshaft,
   **characterized in that**
   the apparatus (100) further comprises a combustion examiner (40) that determines air-fuel ratio states of fuel of the cylinders from the $P\theta$ graph, the heat generation rate graph, and the combustion gas temperature graph;
   fuel injection states and fuel consumption states of the cylinders from the PV graph and the heat generation rate graph;
   fuel amount states of the cylinders from the PV graph and the combustion gas temperature graph;
   knocking of the engine and post-combustion in the cylinders from the dP graph, the heat generation rate graph, and the combustion gas temperature graph; and
   whether maximum combustion pressure of the cylinders coincides from the instantaneous speed change graph and the $P\theta$ graph.

2. The apparatus (100) of claim 1, wherein the combustion analyzer (30) calculates combustion chamber volumes of the cylinders at the rotation angles of the crankshaft from the following Expressions 1 and 2,

[Expression 1]

$$V(i) = vc + s \times X(i)$$

(where V(i) is a combustion chamber volume at a rotation angle, vc is a gap volume, s is the cross-sectional area of a cylinder, X(i) is piston displacement for rotation of a crankshaft, and vc = vh (stroke volume) / (Comratio (compression ratio) - 1.0), vh = s × stroke (height from top dead center to bottom dead center), and s = 3.14 × bore$^2$/4), and

[Expression 2]

$$X(i) = rr \times [(1.0 - \cos(de)) + \frac{1.0 \times (1.0 - \cos(2de))}{4.0 \times ramda}]$$

(where rr is a crank radius, de is a crank angle, and ramda = $\ell$ (length of connecting rod) / rr).

3. The apparatus (100) of claim 1, wherein the combustion analyzer (30) calculates pressure change rates of the cylinders at the rotation angles of the crankshaft from the following Expression 3,

[Expression 3]

$$dP = \frac{P(i-2) - P(i+2) + 8.0 \times [P(i+1) - P(i-1)]}{12}$$

(where dP is a pressure change rate at a rotation angle, P is sampling pressure, and i is a rotation angle of the crankshaft).

4. The apparatus (100) of claim 1, wherein the combustion analyzer (30) calculates heat generation rates of the cylinders at the rotation angles of the crankshaft from the following Expressions 4, 5, and 6,

[Expression 4]

$$ROHR = \frac{A}{\kappa - 1} \left( V \frac{dP}{d\theta} + \kappa P \frac{dV}{d\theta} \right)$$

(where ROHR (Rate of Heat Release) is a heat generation rate at a rotation angle, A = 1.0 / 42700.0, $\kappa$ is a specific heat ratio),

[Expression 5]

$$\kappa = C_0 + C_1 T + C_2 T^2 + \frac{C_3}{air}$$

(where $C_0$ = 1.4373, $C_1$ = -1.318 × 10$^{-4}$, $C_2$ =3.12x 10$^{-8}$, $C_3$ = -4.8 × 10$^{-2}$, *air* is an excess air ratio, and T is combustion gas temperature at a rotation angle), and

[Expression 6]

$$dV(i) = dr \times \left( \frac{360}{\text{Encoder Resolution}} \right) \times s \times rr \times \left( \sin(de) + \left( \frac{1.0}{(2.0 \times ramda)} \times \sin(2.0 \times de) \right) \right)$$

(where dV is a differentiated combustion chamber volume, dr = pai (3.141593) / 180, s = 3.14 × bore²/4, rr is a crank radius, de is a rotation angle of the crankshaft, and ramda = ℓ (length of connecting rod) / rr).

5. The apparatus (100) of claim 1, wherein the combustion analyzer (30) calculates combustion gas temperature of the cylinders at the rotation angles of the crankshaft from the following Expression 7,

[Expression 7]

$$T(i) = \frac{P(i)\,V(i)}{GR}$$

 (where T(i) is combustion gas temperature at a rotation angle, G is gas weight, R is a gas constant, P(i) is combustion chamber pressure at a rotation angle, and V(i) is a combustion chamber volume at a rotation angle).

6. The apparatus (100) of claim 5, wherein the gas weight G in Expression 7 is calculated from the following Expression 8,

[Expression 8]

$$G = \frac{PV}{TR} \times ve$$

(where P is initial pressure, V is a combustion chamber volume, T is initial temperature, and ve is charging efficiency of intake air of an engine, in which charging efficiency of intake air of an engine of 0.8 is applied to four strokes and 0.75 is applied to two strokes).

7. The apparatus (100) of claim 1, wherein the combustion analyzer (30) further shows an instantaneous speed change graph by analyzing instantaneous speeds of the engine at the rotation angles of the crankshaft.

8. The apparatus (100) of claim 7, wherein the combustion analyzer (30) calculates instantaneous speeds of the engine at the rotation angles of the crankshaft from the following Expression 9,

[Expression 9]

$$Instantaneous\ speed[rpm] = \frac{60}{encoder\ resolution \times (count\ clocktime) \times (count\ number)}$$

(where 'Instantaneous speed' is the instantaneous speed of the engine, 'encoder resolution' is the number of pulses (revolution) of an encoder, 'count clock time' is the speed of inter-pulse internal count signal, and 'count number' is the number of internal count signals calculated from the speed of inter-pulse internal count signals).

9. A method for determining a combustion state of an engine using a combustion analysis apparatus (100) for a large-sized low-speed engine, the method analyzing and showing a combustion state of the engine in a Pθ graph showing combustion pressure of cylinders at rotation angles of a crankshaft; a PV graph showing combustion pressure at combustion chamber volumes of the cylinders; a dP graph showing pressure change rates of the cylinders at the rotation angles of the crankshaft; a heat generation rate graph showing heat generation rates of the cylinder at the rotation angles of the crankshaft; a combustion gas temperature graph showing combustion gas temperature of the cylinders at the rotation angles of the crankshaft; and an instantaneous speed change graph showing instantaneous speeds of the engine at the rotation angles of the crankshaft, and
the method is **characterized in** comprising the steps:

determining air-fuel ratio states of fuel of the cylinders from the Pθ graph, the heat generation rate graph, and the combustion gas temperature graph (S100);
determining fuel injection states and fuel consumption states of the cylinders from the PV graph and the heat generation rate graph (S200);
determining fuel amount states of the cylinders from the PV graph and the combustion gas temperature graph (S300);
determining knocking of the engine and post-combustion in the cylinders from the dP graph, the heat generation rate graph, and the combustion gas temperature graph (S400); and
determining whether maximum combustion pressure of the cylinders coincides from the instantaneous speed change graph and the Pθ graph (S500).

10. A computer-readable recording medium on which a program for executing the method of claim 9 in a computer is recorded.

**Patentansprüche**

1. Eine Verbrennungsanalysevorrichtung (100) eines großformatigen Langsamlaufmotors, die über einen Zyklus eine Verbrennungsanalyse an einem Motor durchführt, wobei die Vorrichtung (100) einen Verbrennungsanalysator (30) umfasst, der Verbrennungsdruckwerte von Zylindern an Rotationswinkeln einer Kurbelwelle anhand eines Signals über individuellen Verbrennungsdruck der Zylinder und eines Signals über einen Rotationswinkel der Kurbelwelle sammelt, die von außen eingegeben werden, und anschließend ein Verbrennungskammervolumen, eine Druckänderungsrate, eine Wärmeerzeugungsrate, Augenblicksgeschwindigkeiten des Motors und des Verbrennungsgases für die Zylinder in einer Vielzahl von Graphen analysiert und darstellt,
wobei die Graphen Folgendes einschließen:

einen Pθ-Graph, der den Verbrennungsdruck der Zylinder an den Rotationswinkeln der Kurbelwelle anzeigt;
einen PV-Graph, der den Verbrennungsdruck an Verbrennungskammervolumina der Zylinder anzeigt;
einen dP-Graph, der Druckänderungsraten der Zylinder an den Rotationswinkeln der Kurbelwelle anzeigt;
einen Wärmeerzeugungsratengraph, der Wärmeerzeugungsraten der Zylinder an den Rotationswinkeln der Kurbelwelle anzeigt;
einen Verbrennungsgastemperaturgraph, der Verbrennungsgastemperaturen der Zylinder an den Rotationswinkeln der Kurbelwelle anzeigt; und
einen Augenblicksgeschwindigkeitsänderungsgraph, der Augenblicksgeschwindigkeiten des Motors an den Rotationswinkeln der Kurbelwelle anzeigt;
**dadurch gekennzeichnet, dass**
die Vorrichtung (100) weiter eine Verbrennungsprüfvorrichtung (40) umfasst, die Folgendes bestimmt:

Luft-Kraftstoff-Verhältniszustände des Kraftstoffs der Zylinder anhand des Pθ-Graphs, des Wärmeerzeugungsratengraphs und des Verbrennungsgastemperaturgraphs;
Kraftstoffeinspritzzustände und Kraftstoffverbrauchszustände der Zylinder anhand des PV-Graphs und des Wärmeerzeugungsratengraphs;
Kraftstoffmengenzustände der Zylinder anhand des PV-Graphs und des Verbrennungsgastemperaturgraphs;
Klopfen des Motors und Nachverbrennung in den Zylindern anhand des dP-Graphs, des Wärmeerzeugungsratengraphs und des Verbrennungsgastemperaturgraphs; und
ob der maximale Verbrennungsdruck der Zylinder im Augenblicksgeschwindigkeitsänderungsgraph und im Pθ-Graph übereinstimmt.

2. Die Vorrichtung (100) gemäß Anspruch 1, wobei der Verbrennungsanalysator (30) die Verbrennungskammervolumina der Zylinder an den Rotationswinkeln der Kurbelwelle anhand folgender Ausdrücke 1 und 2 berechnet:

[Ausdruck 1]

$$V(i) = vc + s \times X(i)$$

(worin V(i) ein Verbrennungskammervolumen an einem Rotationswinkel ist, vc ein Unterbrechungsvolumen ist, s die Querschnittsfläche eines Zylinder ist, X(i) der Hubraum bei Drehung einer Kurbelwelle ist und vc = vh (Hubvolumen) / (Comration (Verdichtungsverhältnis) - 1,0), vh = s x Hub (Höhe vom oberen Totpunkt zum unteren Totpunkt) und s = 3,14 x Bohrung$^2$/4), und

[Ausdruck 2]

$$X(i) = rr \times \left[ (1.0 - \cos(de)) + \frac{1.0 \times (1.0 - \cos(2de))}{4.0 \times ramda} \right]$$

(worin rr ein Kurbelwellenradius ist, de ein Kurbelwellenwinkel ist und ramda = $\ell$ (Länge der Pleuelstange)/rr).

3. Die Vorrichtung (100) gemäß Anspruch 1, wobei der Verbrennungsanalysator (30) Druckänderungsraten der Zylinder an den Rotationswinkeln der Kurbelwelle anhand des folgenden Ausdrucks 3 berechnet:

[Ausdruck 3]

$$dP = \frac{P(i-2) - P(i+2) + 8.0 \times [P(i+1) - P(i-1)]}{12}$$

(worin dP eine Druckänderungsrate an einem Rotationswinkel ist, P der Prüfdruck ist und i ein Rotationswinkel der Kurbelwelle ist).

4. Die Vorrichtung (100) gemäß Anspruch 1, wobei der Verbrennungsanalysator (30) Wärmeerzeugungsraten der Zylinder an den Rotationswinkeln der Kurbelwelle anhand der folgenden Ausdrücke 4, 5 und 6 berechnet:

[Ausdruck 4]

$$ROHR = \frac{A}{\kappa - 1} \left( V \frac{dP}{d\theta} + \kappa P \frac{dV}{d\theta} \right)$$

(worin ROHR (Rate of Heat Release, Rate der Wärmefreisetzung) eine Wärmeerzeugungsrate an einem Rotationswinkel ist, A = 1,0 / 42700,0, K ein spezifisches Wärmeverhältnis ist),

[Ausdruck 5]

$$\kappa = C_0 + C_1 T + C_2 T^2 + \frac{C_3}{air}$$

(worin

$C_0$ = 1.4373, $C_1$ = -1.318 × $10^{-4}$, $C_2$ = 3.12 × $10^{-8}$, $C_3$ = -4.8 ×

$10^{-2}$, $air$

ein Überschussluftverhältnis ist und T die Verbrennungsgastemperatur an einem Rotationswinkel ist), und

[Ausdruck 6]

$$dV(i) = dr \times \left(\frac{360}{\text{Encoder Resolution}}\right) \times s \times rr \times \left(\sin(de) + \left(\frac{1.0}{(2.0 \times ramda)} \times \sin(2.0 \times de)\right)\right)$$

Encoder Resolution = Encoderauflösung
(worin dV ein differenziertes Verbrennungskammervolumen ist, dr = pai (3,141593) / 180, s = 3,14 x Bohrung$^2$/4, rr ein Kurbelwellenradius ist, de ein Rotationswinkel der Kurbelwelle ist und ramda = ℓ (Länge der Pleuelstange)/rr).

5. Die Vorrichtung (100) gemäß Anspruch 1, worin der Verbrennungsanalysator (30) die Verbrennungsgastemperatur der Zylinder an den Rotationswinkeln der Kurbelwelle anhand des folgenden Ausdrucks 7 berechnet:

[Ausdruck 7]

$$T(i) = \frac{P(i)V(i)}{GR}$$

(worin T(i) die Verbrennungsgastemperatur an einem Rotationswinkel ist, G das Gasgewicht ist, R eine Gaskonstante ist, P(i) der Verbrennungskammerdruck an einem Rotationswinkel ist und V(i) ein Verbrennungskammervolumen an einem Rotationswinkel ist).

6. Die Vorrichtung (100) gemäß Anspruch 5, worin das Gasgewicht G im Ausdruck 7 anhand des folgenden Ausdrucks 8 berechnet wird:

[Ausdruck 8]

$$G = \frac{PV}{TR} \times ve$$

(worin P der Anfangsdruck ist, V ein Verbrennungskammervolumen ist, T die Anfangstemperatur ist und ve die Ladeeffizienz der Einlassluft eines Motors ist, wobei die Ladeeffizienz der Einlassluft eines Motors von 0,8 auf vier Hübe angewandt wird und 0,75 auf zwei Hübe angewandt wird).

7. Die Vorrichtung (100) gemäß Anspruch 1, wobei der Verbrennungsanalysator (30) weiter einen Augenblicksgeschwindigkeitsänderungsgraph durch Analyse der Augenblicksgeschwindigkeiten des Motors an den Rotationswinkeln der Kurbelwelle zeigt.

8. Die Vorrichtung (100) gemäß Anspruch 7, wobei der Verbrennungsanalysator (30) die Augenblicksgeschwindigkeiten des Motors an den Rotationswinkeln der Kurbelwelle anhand des folgenden Ausdrucks 9 berechnet:

[Ausdruck 9]

$$\text{Augenblicksgeschwindigkeit[U/min]} = \frac{60}{\text{Encoderauflösung x Zähltakt x Zählung}}$$

(worin "Augenblicksgeschwindigkeit" die Augenblicksgeschwindigkeit des Motors ist, "Encoderauflösung" die Anzahl der Impulse (Umdrehung) eines Codierers ist, "Zähltakt" die Geschwindigkeit des internen Zwischenpulszählsignals ist und "Zählung" die Anzahl interner Zählsignale ist, die aus der Geschwindigkeit der internen Zwischenpulszählsignale berechnet wird).

9. Ein Verfahren zum Bestimmen eines Verbrennungszustands eines Motors mit Hilfe einer Verbrennungsanalysevorrichtung (100) für einen großformatigen Langsamlaufmotors, wobei das Verfahren Folgendes umfasst: das Analysieren und Darstellen eines Verbrennungszustands des Motors in einem Pθ-Graph, der den Verbrennungsdruck der Zylinder an Rotationswinkeln einer Kurbelwelle anzeigt; einem PV-Graph, der den Verbrennungsdruck an Verbrennungskammervolumina der Zylinder anzeigt; einem dP-Graph, der Druckänderungsraten der Zylinder an den Rotationswinkeln der Kurbelwelle anzeigt; einem Wärmeerzeugungsratengraph, der Wärmeerzeugungsraten des Zylinders an den Rotationswinkeln der Kurbelwelle anzeigt; einem Verbrennungsgastemperaturgraph, der die Verbrennungsgastemperatur der Zylinder an den Rotationswinkeln der Kurbelwelle anzeigt; und einem Augenblicksgeschwindigkeitsänderungsgraph, der die Augenblicksgeschwindigkeiten des Motors an den Rotationswinkeln der Kurbelwelle anzeigt; und

das Verfahren ist **dadurch gekennzeichnet, dass** es folgende Schritte umfasst:

das Bestimmen der Luft-Kraftstoff-Verhältniszustände des Kraftstoffs der Zylinder aus dem Pθ-Graph, dem Wärmeerzeugungsratengraph und dem Verbrennungsgastemperaturgraph (S100);

das Bestimmen der Kraftstoffeinspritzzustände und der Kraftstoffverbrauchszustände der Zylinder anhand des PV-Graphs und des Wärmeerzeugungsratengraphs (S200);

das Bestimmen der Kraftstoffmengenzustände der Zylinder anhand des PV-Graphs und des Verbrennungsgastemperaturgraphs (S300) ;

das Bestimmen des Klopfens des Motors und der Nachverbrennung in den Zylindern anhand des dP-Graphs, des Wärmeerzeugungsratengraphs und des Verbrennungsgastemperaturgraphs (S400); und

das Bestimmen, ob der maximale Verbrennungsdruck der Zylinder im Augenblicksgeschwindigkeitsänderungsgraph und im Pθ-Graph übereinstimmt (S500).

10. Ein maschinenlesbares Aufnahmemedium, auf dem ein Programm zu Ausführen des Verfahrens gemäß Anspruch 9 in einem Computer gespeichert ist.

## Revendications

1. Appareil d'analyse de combustion (100) d'un moteur à faible vitesse de grande taille exécutant une analyse de combustion sur un moteur pour un cycle, l'appareil (100) comprenant un analyseur de combustion (30) prélevant des valeurs de pression de combustion de cylindres à des angles de rotation d'un vilebrequin à partir d'un signal relatif à la pression de combustion individuelle des cylindres et d'un signal relatif à un angle de rotation du vilebrequin, lesquelles sont entrées depuis l'extérieur, et analysant ensuite et montrant un volume de chambre de combustion, une vitesse de modification de pression, une vitesse de génération de chaleur, des vitesses instantanées du moteur et du gaz de combustion, pour les cylindres, dans une pluralité de graphiques,

dans lequel les graphiques comprennent :

un graphique Pθ montrant une pression de combustion des cylindres aux angles de rotation du vilebrequin;

un graphique PV montrant une pression de combustion pour des volumes de chambre de combustion des cylindres;

un graphique dP montrant des vitesses de changement de pression des cylindres aux angles de rotation du vilebrequin;

un graphique de vitesse de génération de chaleur montrant des vitesses de génération de chaleur des cylindres aux angles de rotation du vilebrequin;

un graphique de température de gaz de combustion montrant des températures de gaz de combustion des cylindres aux angles de rotation du vilebrequin et

un graphique de changement de vitesse instantanée montrant des vitesses instantanées du moteur aux angles de rotation du vilebrequin,

**caractérisé en ce que**

l'appareil (100) comprend en outre un examinateur de combustion (40) déterminant

des états de rapport air-carburant relatifs au carburant des cylindres, à partir du graphique Pθ, du graphique de vitesse de génération de chaleur et du graphique de température de gaz de combustion;

des états d'injection de carburant et des états de consommation de carburant des cylindres, à partir du graphique PV et du graphique de vitesse de génération de chaleur;

des états de quantité de carburant des cylindres, à partir du graphique PV et du graphique de température de gaz de combustion;

le cliquetis du moteur et la postcombustion dans les cylindres, à partir du graphique dP, du graphique de vitesse de génération de chaleur et du graphique de température de gaz de combustion; et

si la pression de combustion maximale des cylindres coïncide, à partir du graphique de changement de vitesse instantanée et du graphique Pθ.

2. Appareil (100) selon la revendication 1, dans lequel l'analyseur de combustion (30) calcule des volumes de chambre de combustion des cylindres aux angles de rotation du vilebrequin à partir des Expressions 1 et 2 suivantes:

[Expression 1]

$$V(i) = vc + s \times X(i)$$

(où V(i) est un volume de chambre de combustion à un angle de rotation, vc est un volume d'espace, s est l'aire de section transversale d'un cylindre, X(i) est un déplacement de piston pour la rotation d'un vilebrequin, et vc = vh (volume systolique) / Comratio (rapport de compression) - 1,0), vh = s x course (hauteur du centre mort haut au centre mort bas), et s = 3,14 x alésage$^2$/4), et

[Expression 2]

$$X(i) = rr \times [(1.0 - \cos(de)) + \frac{1.0 \times (1.0 - \cos(2de))}{4.0 \times ramda}]$$

(où rr est un rayon de vilebrequin, de est un angle de vilebrequin, et ramda = ℓ (longueur de la tige de connexion) / rr).

3. Appareil (100) selon la revendication 1, dans lequel l'analyseur de combustion (30) calcule des vitesses de changement de pression des cylindres aux angles de rotation du vilebrequin à partir de l'Expression 3 suivante:

[Expression 3]

$$dP = \frac{P(i-2) - P(i+2) + 8.0 \times [P(i+1) - P(i-1)]}{12}$$

(où dP est une vitesse de changement de pression à un angle de rotation, P est une pression d'échantillonnage et i est un angle de rotation du vilebrequin).

4. Appareil (100) selon la revendication 1, dans lequel l'analyseur de combustion (30) calcule des vitesses de génération de chaleur des cylindres aux angles de rotation du vilebrequin à partir des Expressions 4, 5 et 6 suivantes:

[Expression 4]

$$ROHR = \frac{A}{\kappa - 1} \left( V\frac{dP}{d\theta} + \kappa P\frac{dV}{d\theta} \right)$$

(où ROHR (vitesse de libération de chaleur) est une vitesse de génération de chaleur à un angle de rotation, A = 1,0 / 42700,0, $\kappa$ est un rapport de chaleur spécifique),

[Expression 5]

$$\kappa = C_0 + C_1 T + C_2 T^2 + \frac{C_3}{air}$$

(où $C_0$ = 1,4373, $C_1$ = -1,318 x $10^{-4}$, $C_2$ = 3,12 x $10^{-8}$, $C_3$ = -4,8 x $10^{-2}$, *air* est un rapport d'air excédentaire et T est une température de gaz de combustion à un angle de rotation), et

[Expression 6]

$$dV(i) = dr \times \left(\frac{360}{\text{résolution d'encodeur}}\right) \times 8 \times rr \times \left(\sin(de) + \left(\frac{1.0}{2.0 \times \text{ramda}} \times \sin(2.0 \times de)\right)\right)$$

(où dV est un volume de chambre de combustion différentié, dr = pai (3,141593) / 180, s = 3,14 x alésage$^2$/4, rr est un rayon de vilebrequin, de est un angle de rotation du vilebrequin, et ramda = $\ell$ (longueur de la tige de connexion) / rr).

5. Appareil (100) selon la revendication 1, dans lequel l'analyseur de combustion (30) calcule une température de gaz de combustion des cylindres aux angles de rotation du vilebrequin à partir de l'Expression 7 suivante:

[Expression 7]

$$T(i) = \frac{P(i)\,V(i)}{GR}$$

(où T(i) est une température de gaz de combustion à un angle de rotation, G est un poids de gaz, R est une constante de gaz, P(i) est une pression de chambre de combustion à un angle de rotation, et V(i) est un volume de chambre de combustion à un angle de rotation).

6. Appareil (100) selon la revendication 5, dans lequel le poids de gaz G dans l'Expression 7 est calculé à partir de l'Expression 8 suivante:

[Expression 8]

$$G = \frac{PV}{TR} \times vc$$

(où P est une pression initiale, V est un volume de chambre de combustion, T est une température initiale, et ve est une efficacité de charge de l'air d'admission d'un moteur, l'efficacité de charge de l'air d'admission d'un moteur s'élevant à 0,8 si elle est appliquée à quatre courses et à 0,75 si elle est appliquée à deux courses).

7. Appareil (100) selon la revendication 1, dans lequel l'analyseur de combustion (30) montre en outre un graphique de changement de vitesse instantanée par l'analyse de vitesses instantanées du moteur aux angles de rotation du vilebrequin.

8. Appareil (100) selon la revendication 7, dans lequel l'analyseur de combustion (30) calcule des vitesses instantanées du moteur aux angles de rotation du vilebrequin à partir de l'Expression 9 suivante:

[Expression 9]

$$vitesse\ instantan\acute{e}e[\text{rpm}] = \frac{60}{\text{résolution d'encodeur} \times (\text{temps d'horloge}) \times (\text{nombre de comptages})}$$

(où «vitesse instantanée» est la vitesse instantanée du moteur, «résolution d'encodeur» est le nombre d'impulsions (tours) d'un encodeur, «temps d'horloge» est la vitesse d'un signal de comptage interne entre les impulsions, et «nombre de comptages» est le nombre de signaux de comptage internes calculés à partir de la vitesse de signaux de comptage internes entre les impulsions).

9. Procédé de détermination d'un état de combustion d'un moteur à l'aide d'un appareil d'analyse de combustion (100) pour un moteur à faible vitesse de grande taille, le procédé analysant et montrant un état de combustion du moteur dans un graphique Pθ montrant une pression de combustion de cylindres à des angles de rotation d'un vilebrequin; un graphique PV montrant une pression de combustion à des volumes de chambre de combustion des cylindres; un graphique dP montrant des vitesses de changement de pression des cylindres aux angles de rotation du vilebrequin; un graphique de vitesses de génération de chaleur montrant des vitesses de génération de chaleur du cylindre aux angles de rotation du vilebrequin; un graphique de température de gaz de combustion montrant une température de gaz de combustion des cylindres aux angles de rotation du vilebrequin; et un graphique de changement de vitesse instantanée montrant des vitesses instantanées du moteur aux angles de rotation du vilebrequin, et le procédé étant **caractérisé en ce qu'**il comprend les étapes suivantes:

détermination d'états de rapport air-carburant relatifs au carburant des cylindres, à partir du graphique Pθ, du graphique de vitesse de génération de chaleur et du graphique de température de gaz de combustion (S100); détermination d'états d'injection de carburant et d'états de consommation de carburant des cylindres, à partir du graphique PV et du graphique de vitesse de génération de chaleur (S200); détermination d'états de quantité de carburant des cylindres, à partir du graphique PV et du graphique de température de gaz de combustion (S300); détermination du cliquetis du moteur et de la postcombustion dans les cylindres, à partir du graphique dP, du graphique de vitesse de génération de chaleur et du graphique de température de gaz de combustion (S400); et détermination de la coïncidence de la pression de combustion maximale des cylindres, à partir du graphique de changement de vitesse instantanée et du graphique Pθ (S500).

10. Support d'enregistrement lisible par ordinateur, sur lequel est enregistré un programme pour la mise en œuvre du procédé selon la revendication 9 dans un ordinateur.

10

100

PRESSURE
SENSOR

COMBUSTION
ANALYZER

COMBUSTION
EXAMINER

ANGLE
SENSOR

30

40

20

FIG. 1

FIG. 2

FIG. 3

27

(a)

(b)

FIG. 4

(a)

(b)

FIG. 5

FIG. 6

(a)

(b)

FIG. 7

FIG. 8

(a)

(b)

FIG. 9

(a)

(b)

FIG. 10

FIG. 11

START

DETERMINE AIR-FUEL RATIO STATE OF FUEL OF CYLINDER FROM P□ GRAPH, HEAT GENERATION RATE GRAPH, AND COMBUSTION GAS TEMPERATURE GRAPH ⟩~S100

DETERMINE FUEL INJECTION STATE AND FUEL CONSUMPTION STATE OF CYLINDER FROM PV GRAPH AND HEAT GENERATION RATE GRAPH ⟩~S200

DETERMINE FUEL AMOUNT STATE OF CYLINDER FROM PV GRAPH AND COMBUSTION GAS TEMPERATURE GRAPH ⟩~S300

DETERMINE KNOCKING OF ENGINE AND POST-COMBUSTION IN CYLINDER FROM dP GRAPH, HEAT GENERATION RATE GRAPH, AND COMBUSTION GAS TEMPERATURE GRAPH ⟩~S400

DETERMINE WHETHER MAXIMUM COMBUSTION PRESSURE OF CYLINDER COINCIDES FROM INSTANTANEOUS SPEED GRAPH AND Pθ GRAPH ⟩~S500

END

# FIG. 12

START

FIND OUT MAXIMUM COMPRESSION PRESSURE OF CYLINDER AND DIFFERENCE IN DEGREE OF PRESSURE INCREASE OF CYLINDER FROM P□ GRAPH AND dP GRAPH — S110

FIND OUT DIFFERENCE IN DEGREE OF REMAINING GAS OF CYLINDER FROM DIFFERENCE IN DEGREE OF PRESSURE INCREASE OF CYLINDER — S120

FIND OUT DIFFERENCE IN HEAT GENERATION RATE OF CYLINDER FROM HEAT GENERATION RATE GRAPH — S130

FIND OUT DIFFERENCE IN COMBUSTION GAS OF CYLINDER FROM COMBUSTION GAS TEMPERATURE GRAPH — S140

DETERMINE AIR-FUEL RATIO STATE OF FUEL OF CYLINDER BY COMPARING DIFFERENCE IN DEGREE OF REMAINING GAS OF CYLINDER, DIFFERENCE IN HEAT GENERATION RATE OF CYLINDER, AND DIFFERENCE IN COMBUSTION GAS OF CYLINDER — S150

END

# FIG. 13

START

FIND OUT DIFFERENCE IN OUTPUT OF
CYLINDER FROM PV GRAPH ~S210

FIND OUT FUEL IGNITION TIME POINT AND FUEL
EXTINGUISHMENT TIME POINT OF CYLINDER ~S220
FROM HEAT GENERATION RATE GRAPH

FIND OUT IGNITION DELAY PERIOD OF FUEL OF
CYLINDER FROM FUEL IGNITION TIME POINT OF ~S230
CYLINDER

FIND OUT FUEL INJECTION TIME POINT OF
CYLINDER BY DERIVING AIR SUPPLY
TEMPERATURE AND PRESSURE OF CYLINDER ~S240
FROM IGNITION DELAY PERIOD OF FUEL OF
CYLINDER

CALCULATE FUEL CONSUMPTION AMOUNT OF
CYLINDER BY CALCULATING AREA BETWEEN
FUEL IGNITION TIME POINT AND FUEL ~S250
EXTINGUISHMENT TIME POINT OF CYLINDER

DETERMINE FUEL INJECTION STATE OF
CYLINDER BY COMPARING FUEL INJECTION
TIME POINT OF CYLINDER AND DETERMINE
FUEL CONSUMPTION STATE OF CYLINDER BY ~S260
COMPARING FUEL CONSUMPTION AMOUNT OF
CYLINDER

END

FIG. 14

START

FIND OUT DIFFERENCE IN OUTPUT OF
CYLINDER FROM PV GRAPH — S310

FIND OUT DIFFERENCE IN TEMPERATURE
AROUND MAXIMUM COMBUSTION
TEMPERATURE OF CYLINDER FROM
COMBUSTION GAS TEMPERATURE GRAPH — S320

DETERMINE FUEL AMOUNT STATE OF
CYLINDER BY COMPARING DIFFERENCE IN
OUTPUT OF CYLINDER AND DIFFERENCE IN
TEMPERATURE AROUND MAXIMUM
COMBUSTION TEMPERATURE OF CYLINDER — S330

END

# FIG.15

START

FIND OUT DIFFERENCE IN PRESSURE OF CYLINDER AFTER MAXIMUM COMBUSTION PRESSURE FROM dP GRAPH ~S410

FIND OUT DIFFERENCE IN HEAT GENERATION RATE OF CYLINDER AT POINT CORRESPONDING TO dP GRAPH FROM HEAT GENERATION RATE GRAPH ~S420

FIND OUT DIFFERENCE IN COMBUSTION GAS TEMPERATURE OF CYLINDER AFTER MAXIMUM COMBUSTION TEMPERATURE FROM COMBUSTION GAS TEMPERATURE GRAPH ~S430

DETERMINE KNOCKING OF ENGINE AND POST-COMBUSTION IN CYLINDER BY COMPARING DIFFERENCE IN PRESSURE OF CYLINDER, DIFFERENCE IN HEAT GENERATION RATE OF CYLINDER, AND DIFFERENCE IN COMBUSTION GAS TEMPERATURE OF CYLINDER ~S440

END

FIG. 16

START

FIND OUT DIFFERENCE IN AMPLITUDE BY COMPARING INSTANTANEOUS SPEED CHANGE GRAPH AND REFERENCE INSTANTANEOUS SPEED CHANGE GRAPH ⟩~S510

FIND OUT DIFFERENCE IN POSITION OF MAXIMUM COMBUSTION PRESSURE OF CYLINDER FROM P□ GRAPH ⟩~S520

DETERMINE WHETHER MAXIMUM COMBUSTION PRESSURE OF CYLINDER COINCIDES BY COMPARING DIFFERENCE IN AMPLITUDE AND DIFFERENCE IN POSITION OF MAXIMUM COMBUSTION PRESSURE OF CYLINDER ⟩~S530

END

FIG. 17

**EP 3 561 475 B1**

## REFERENCES CITED IN THE DESCRIPTION

**Patent documents cited in the description**

- KR 1020180047000
- WO 2017076450 A1
- WO 2004048761 A1
- US 2017082523 A1
- FR 2888880 A1
- US 2007100534 A1